# EUROPEAN PATENT APPLICATION

(11) **EP 4 486 015 A1**
(43) Date of publication of application: **01.01.2025**
(21) Application number: 22927760.3
(22) Date of filing: 25.02.2022
(51) Int. Cl.: H04W 52/02

(54) **INFORMATION TRANSMISSION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: XU, Weijie, Dongguan, Guangdong 523860 (CN)
(74) Representative: RGTH
(86) International application number: PCT/CN2022/077944
(87) International publication number: WO 2023/159474

(57) **Abstract**

The present application relates to an information transmission method, a terminal device, a computer-readable storage medium, a computer program product, and a computer program. The method includes: monitoring, by a terminal device, a WUS; where the WUS includes N signal portions, and N is an integer greater than or equal to 1.

## Description

### TECHNICAL FIELD

The present application relates to the field of communications, and in particular, to an information transmission method, a terminal device, a network device, a computer-readable storage medium, a computer program product, and a computer program.

### BACKGROUND

With development of technology, more attention is paid to power saving of a terminal device, and thus a method is proposed in which the terminal device uses a receiver with lower power consumption. In this method, a primary receiver of the terminal device may be woken depending on actual needs to perform relevant processing. However, how to make the terminal device more flexible and applicable to more scenarios becomes a problem that needs to be solved.

### SUMMARY

Embodiments of the present application provide an information transmission method, a terminal device, a network device, a computer-readable storage medium, a computer program product, and a computer program.

The embodiments of the present application provide an information transmission method, and the method includes:
monitoring, by a terminal device, a wake-up signal (WUS);
where the WUS includes N signal portions, and N is an integer greater than or equal to 1.

The embodiments of the present application provide an information transmission method, and the method includes:
sending, by a network device, a wake-up signal (WUS);
where the WUS includes N signal portions, and N is an integer greater than or equal to 1.

The embodiments of the present application provide a terminal device, and the terminal device includes:
a first communication unit configured to monitor a wake-up signal (WUS);
where the WUS includes N signal portions, and N is an integer greater than or equal to 1.

The embodiments of the present application provide a network device, and the network device includes:
a second communication unit, configured to send a wake-up signal (WUS);
where the WUS includes N signal portions, and N is an integer greater than or equal to 1.

The embodiments of the present application provide a chip for implementing the above methods.

Specifically, the chip includes: a processor, configured to call and run a computer program from a memory to cause a device equipped with the chip to perform the above methods.

The embodiments of the present application provide a computer-readable storage medium, configured to store a computer program, and the computer program, when executed by a device, causes the device to perform the above methods.

The embodiments of the present application provide a computer program product including computer program instructions, and the computer program instructions cause a computer to perform the above methods.

The embodiments of the present application provide a computer program, and the computer program, when run on a computer, causes the computer to perform the above methods.

In the embodiments of the present application, the WUS monitored by the terminal device can carry N signal portions, by this way, content capable of being carried by the WUS can carry may be divided, so that while ensuring power saving of the terminal device, corresponding signal portions can be carried more flexibly in the WUS. Therefore, the WUS can be more flexibly applied to more scenarios.

### BRIEF DESCRIPTION OF THE DRAWINGS

FIG. 1 is a schematic diagram of an application scenario, in accordance with embodiments of the present application.
FIG. 2 is a schematic diagram of a scenario, in accordance with a processing method of introducing a power saving signal in a DRX.
FIG. 3 is a diagram of a scenario in which a terminal device is woken by a power saving signal to receive a paging message.
FIG. 4 is a schematic flowchart of an information transmission method, in accordance with an embodiment of the present application.
FIG. 5 is a schematic diagram of a composition of a terminal device, in accordance with an embodiment of the present application.
FIGS. 6 and 7 are two schematic diagrams of components of a WUS, in accordance with an embodiment of the present application.
FIG. 8 is a schematic diagram of an OOK signal generated based on multiple target subcarriers on an OFDM symbol, in accordance with another embodiment of the present application.
FIG. 9 is a schematic flowchart of another information transmission method, in accordance with an embodiment of the present application.
FIG. 10 is a schematic block diagram of a terminal device, in accordance with an embodiment of the present application.
FIG. 11 is a schematic block diagram of a network device, in accordance with an embodiment of the present application.
FIG. 12 is a schematic block diagram of another network device, in accordance with an embodiment of the present application.
FIG. 13 is a schematic block diagram of a communication device, in accordance with embodiments of the present application.
FIG. 14 is a schematic block diagram of a chip, in accordance with embodiments of the present application.
FIG. 15 is a schematic block diagram of a communication system, in accordance with embodiments of the present application.

### DETAILED DESCRIPTION

Technical solutions in the embodiments of the present application will be described below with reference to the accompanying drawings in the embodiments of the present application.

The technical solutions in the embodiments of the present application may be applied to various communication systems, such as a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial networks (NTN) system, a universal mobile telecommunication system (UMTS), wireless local area networks (WLAN), wireless fidelity (WiFi), a 5th-generation (5G) system, or other communication systems.

Generally speaking, traditional communication systems support a limited number of connections which are easy to be implemented. However, with development of communication technologies, mobile communication systems will support not only traditional communications, but also, for example, device to device (D2D) communication, machine to machine (M2M) communication, machine type communication (MTC), vehicle to vehicle (V2V) communication, or vehicle to everything (V2X) communication. The embodiments of the present application may also be applied to these communication systems.

In a possible implementation, a communication system in the embodiments of the present application may be applied to a carrier aggregation (CA) scenario, a dual connectivity (DC) scenario, or a standalone (SA) networking scenario.

In a possible implementation, a communication system in the embodiments of the present application may be applied to an unlicensed spectrum, where the unlicensed spectrum may also be considered as a shared spectrum; alternatively, the communication system in the embodiments of the present application may also be applied to a licensed spectrum, where the licensed spectrum may also be considered as an unshared spectrum.

In the embodiments of the present application, each embodiment will be described in conjunction with a network device and a terminal device. The terminal device may also be referred to as a user equipment (UE), an access terminal, a user unit, a user station, a mobile station, a mobile platform, a remote station, a remote terminal, a mobile device, a user terminal, a terminal, a wireless communication device, a user agent, a user device, or the like.

The terminal device may be a station (ST) in WLAN, which may be a cellular phone, a cordless phone, a session initiation protocol (SIP) phone, a wireless local loop (WLL) station, a personal digital assistant (PDA) device, a handheld device with wireless communication functions, a computing device or other processing devices connected to a wireless modem, an in-vehicle device, a wearable device, a terminal device in a next-generation communication system (e.g., an NR network), a terminal device in a future evolved public land mobile network (PLMN) network, or the like.

In the embodiments of the present application, the terminal device may be deployed on land, including indoor or outdoor, handheld, wearable, or in-vehicle; the terminal device may also be deployed on water (e.g., on a steamship); and the terminal device may also be deployed in air (e.g., on an airplane, on a balloon, or on a satellite).

In the embodiments of the present application, the terminal device may be a mobile phone, a pad, a computer with a wireless transceiver function, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, or the like.

By way of example and not limitation, in the embodiments of the present application, the terminal device may also be a wearable device. The wearable device may also be referred to as a wearable smart device, which is a general term for wearable devices developed by using wearable technology and intelligent design for everyday wear, such as glasses, gloves, a watch, clothing, or shoes. The wearable device is a portable device that is worn directly on a body, or integrated into a user's clothing or accessories. The wearable device is not only a hardware device, but also implement powerful functions through software support as well as data interaction or cloud interaction. Generalized wearable smart devices include full-featured, large-sized devices that may implement full or partial functionality without relying on smart phones, such as a smart watch or smart glasses, and devices that focus on a certain type of application functionality only and need to be used in conjunction with other devices (such as smart phones), such as various smart bracelets or smart jewelries for monitoring physical signs.

In the embodiments of the present application, the network device may be a device for communicating with a mobile device The network device may be an access point (AP) in WLAN, a base station (Base Transceiver Station, BTS) in GSM or CDMA, a base station (NodeB, NB) in WCDMA, an evolutional base station (Evolutional Node B, eNB or eNodeB) in LTE, a relay station or access point, an in-vehicle device, a wearable device, a network device (gNB) in an NR network, a network device in a future evolved PLMN, a network device in an NTN, or the like.

By way of example and not limitation, in the embodiments of the present application, the network device may have a mobile characteristic. For example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may also be a base station set up on land, water, or the like.

In the embodiments of the present application, the network device may provide services for a cell, and the terminal device may communicate with the network device through transmission resources (e.g., frequency domain resources, or spectrum resources) used by the cell. The cell may be a cell corresponding to the network device (e.g., a base station). The cell may belong to a macro base station or a base station corresponding to a small cell. The small cell here may include a metro cell, a micro cell, a pico cell, a femto cell, or the like. These small cells have characteristics of small coverage and low transmission power, and are suitable for providing high-speed data transmission services.

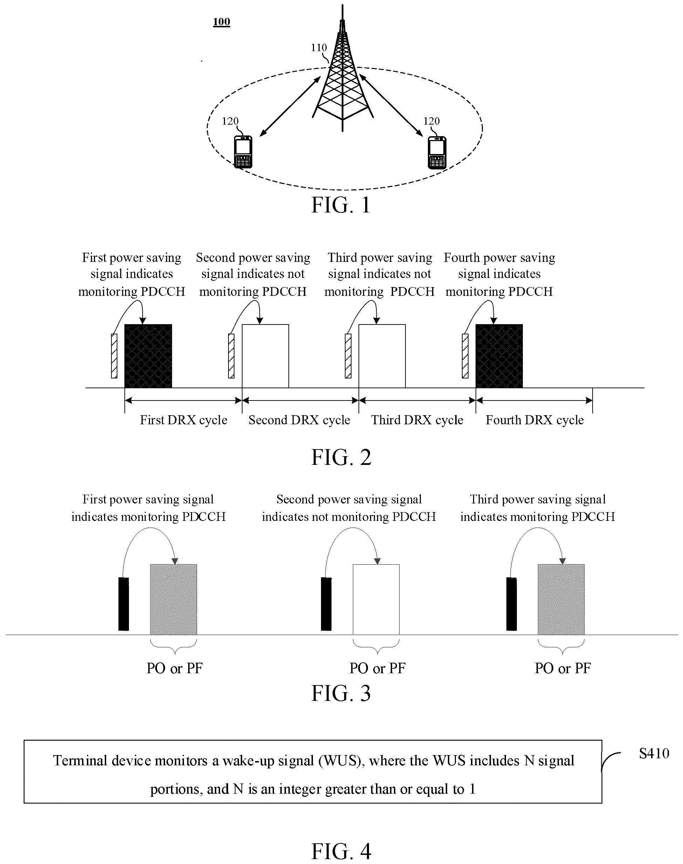

FIG. 1 exemplarily shows a communication system 100. The communication system includes a network device 110 and two terminal devices 120. In a possible implementation, the communication system 100 may include multiple network devices 110, and coverage area of each network device 110 may be provided therein with other number of terminal devices, which is not limited in the embodiments of the present application.

In a possible implementation, the network device may also include other network entities, such as a mobility management entity (MME), an access and mobility management function (AMF) entity, which is not limited in the embodiments of the present application.

Furthermore, the network device may include an access network device and a core network device. That is, a wireless communication system further includes multiple core networks for communicating with access network devices. The access network device may be an evolutional base station (evolutional node B, shorted for eNB or e-NodeB), a macro base station, a micro base station (also called a "small base station"), a pico base station, an access point (AP), a transmission point (TP) or a new generation Node B (gNodeB) in a long-term evolution (LTE) system, a next generation system (mobile communication system) (next radio, NR) or an authorized auxiliary access long-term evolution (LAA-LTE) system.

It should be understood that a device in a network/system having a communication function in the embodiments of the present application may be referred to as a communication device. In an example of the communication system shown in FIG. 1, the communication devices may include the network device and the terminal devices that have the communication function. The network device and the terminal devices may be specific devices in the embodiments of the present application, which will not be repeated here. The communication devices may further include other devices in the communication system, such as other network entities like a network controller, and a mobility management entity, which is not limited in the embodiments of the present application.

To facilitate understanding of the embodiments of the present application, basic processes and basic concepts involved in the embodiments of the present application are briefly described below. It should be understood that the basic processes and basic concepts introduced below do not limit the embodiments of the present application.

Main application scenarios of 5G include: enhanced mobile broadband (eMBB), ultra reliable low latency communications (URLLC), and massive machine type communications (mMTC). Here, eMBB aims to enable users to obtain multimedia content, services and data, and demand for eMBB is growing rapidly. Since eMBB may be deployed in different scenarios, such as indoor, in urban, and in rural, its capabilities for different scenarios are quite different and requirements for different scenarios are also quite different, so it must be analyzed in detail in combination with specific deployment scenarios. Typical applications of URLLC include: industrial automation, power automation, remote medical operations (surgerys), traffic safety, and the like. Typical characteristics of mMTC include: high connection density, small data volume, latency-insensitive services, low cost, long service life, and the like.

In 5G network environment, in order to achieve the purpose of reducing radio signaling and quickly restoring wireless connections and data services, a new radio resource control (RRC) state, namely an RRC inactive state (RRC_INACTIVE), is defined. This state is different from an RRC idle state (RRC_IDLE), an RRC active state (RRC_ACTIVE) or an RRC connected state (RRC_CONNECTED).

Power saving of a terminal device (or called UE) is described below.

### I. Power saving of the terminal device for the RRC connected state

With evolution of 5G, higher requirements are put forward for power saving of a UE (i.e., a terminal device). For example, for an existing discontinuous reception (DRX) mechanism, during each on duration (active time), the UE (i.e., the terminal device) needs to continuously detect a physical downlink control channel (PDCCH) to determine whether a base station schedules data transmission to the UE. For most UEs (i.e., terminal devices), there may be no need to receive data transmission for a long time, but they are still necessary to maintain a regular wake-up mechanism to monitor possible downlink transmission. For such UEs (i.e., terminal devices), there is room for further optimization of power saving.

In an R16 standard, a power saving signal is introduced to achieve further power saving. The power saving signal may be used in combination with a DRX mechanism. A processing method for introducing the power saving signal may specifically include that: before the DRX on duration (active time), the terminal device receives the power saving signal (or called a power saving wake-up signal). That is, when there is data transmission for a terminal device in a DRX cycle, a network device may "wake up" the terminal device through the power saving signal, so that the terminal device monitors a PDCCH during the DRX on duration after the terminal device is woken up; otherwise, when there is no data transmission for the terminal device in a DRX cycle, no power saving signal is sent to the terminal device (that is, the terminal device is not "woken up"), so that the terminal device does not need to monitor the PDCCH during the DRX on duration. Compared with the existing DRX mechanism, the above processing method for introducing the power saving signal is able to omit PDCCH monitoring during the DRX on duration when the terminal device has no data transmission, thereby achieving power saving of the terminal device. The power saving signal may be carried by downLink control information (DCI) format 2_6.

Time when the terminal device is out of the discontinuous reception (DRX) on duration is called inactive time, time when the terminal device is in the DRX on duration is called active time. Combined with FIG. 2, the above processing method for introducing the power saving signal in DRX is explained, which may include that: a first power saving signal indicates monitoring a PDCCH, then the terminal device monitors the PDCCH within active time of a first DRX cycle (the active time of the first DRX cycle is represented as a black box in FIG. 2) after receiving the first power saving signal; a second power saving signal indicates not monitoring the PDCCH, then the terminal device does not monitor the PDCCH within active time of a second DRX cycle (the active time of the second DRX cycle is represented as a colorless box in FIG. 2) after receiving the second power saving signal; a third power saving signal indicates not monitoring the PDCCH, then the terminal device does not monitor the PDCCH within active time of a third DRX cycle (the active time of the third DRX cycle is represented as a colorless box in FIG. 2) after receiving the third power saving signal; and a fourth power saving signal indicates monitoring the PDCCH, the terminal device monitors the PDCCH within active time of a fourth DRX cycle (the active time of the fourth DRX cycle is represented as a black box in FIG. 2) after receiving the fourth power saving signal.

In an R17 standard, in order to further enhance the power saving of the UE (i.e., the terminal device) in the connected state (i.e., the RRC connected state), an enhanced scheme of search space set group switching of R16 and a scheme of skipping PDCCH monitoring in gaps of data transmission (i.e., a PDCCH skipping scheme) are introduced to achieve power saving. Control information related to the search space set group switching and PDCCH skipping may be carried by the PDCCH.

### II. Power saving of the terminal device for the RRC-Idle (RRC idle state)/RRC-inactive (RRC inactive state)

A terminal device in the RRC idle/inactive state receives paging messages via a method of DRX. Since there is a paging occasion (PO) in a DRX cycle, the terminal device only receives paging messages on the PO and does not receive paging messages out of the PO, thereby achieving the purpose of power saving. However, in actual conditions, a probability of the terminal device being paged may not be high. Therefore, if the terminal device periodically monitors the PDCCH on a corresponding PO, and there is a high probability that the terminal device does not monitor a paging message sent to itself, it will objectively reslut in power waste.

Similar to the power saving of terminal devices in the RRC connected state in the R16 standard, the power saving of terminal devices in the idle state for receiving paging messages is optimized in the R17 standard, and a power saving signal similar to the aforementioned power saving signal is introduces, which is referred to as a paging early indication (PEI). The PEI is used to indicate whether a terminal device receives a paging PDCCH on a PO before a target PO arrives. The power saving signal (i.e., PEI) is carried on a PDCCH (hereinafter referred to as a power saving signal based on the PDCCH for convenience of description). Specifically, the power saving signal (i.e., PEI) is carried by downlink control information (DCI) format 2_7.

The power saving signal based on the PDCCH may carry more power saving information, for example, may carry sub-grouping information for indicating a terminal device sub-grouping (or UE sub-grouping) corresponding to power saving information. Multiple terminal devices corresponding to a same PO may be further grouped by UE identifications (UE_IDs) to obtain multiple terminal device groups. If any one terminal device in a terminal device group to which a terminal device belongs needs to be paged, this terminal device needs to receive a paging message on a PO; otherwise, the terminal device does not need to receive the paging message. By combining the terminal device group (or referred to as a terminal device sub-grouping) information with the power saving information, it is possible to more precisely indicate whether the terminal device needs to receive paging on the target PO. For example, a scenario in which a terminal device is woken by an power saving signal to receive a paging message is shown in FIG. 3: a first power saving signal indicates that terminal devices in one or more terminal device groups receive paging on a corresponding paging frame (PF) or PO (the PF or PO indicated by the first power saving signal is represented as a gray square in FIG. 3), then the terminal devices monitor the paging on the PF or PO after the terminal devices in the terminal device group(s) are woken up; a second power saving signal indicates not monitoring the PDCCH, that is, indicates that the terminal devices in one or more terminal device groups do not receive paging on a corresponding PF or PO (the PF or PO indicated by the second power saving signal is represented as a colorless square in FIG. 3), then the terminal devices in the terminal device group may not monitor the paging on the PF or PO; a third power saving signal indicates that the terminal devices in one or more terminal device groups receive paging on a corresponding PF or PO (the PF or PO indicated by the third power saving signal is represented as a gray square in FIG. 3), then the terminal devices monitor paging on the PF or PO after the terminal devices in the terminal device group(s) are woken up.

In order to further save power in terminal devices, an R18 standard plans to introduce a solution of receiving a power saving signal by a wake-up receiver (WUR). The WUR has characteristics of extremely low cost, extremely low complexity and extremely low power consumption, and mainly receives the power saving signal based on envelope detection. Therefore, the power saving signal received by the WUR is different from a signal carried by PDCCH defined in the existing R16 and R17 standards in terms of a modulation method, waveform, or the like. The power saving signal is mainly an envelope signal that has performed ASK modulation on a carrier signal. Demodulation of the envelope signal may also be achieved by driving a low power circuit based on power provided by a wireless radio frequency signal, so the WUR may be passive. The WUR may also be powered by a terminal device. Regardless of the power supply method, the WUR greatly reduces power consumption compared to a traditional receiver of the terminal device. For example, the WUR can achieve a power consumption of less than 1 milliwatt (mW), which is much lower than power consumption of traditional receivers of tens to hundreds of mW. The WUR may be combined with the terminal device, and serve as an additional module of a receiver of the terminal device, or it may be used alone as a wake-up function module of the terminal device.

It should be understood that terms "system" and "network" are often used interchangeably herein. The term "and/or" herein is used to describe an association relationship between associated objects, for example, to indicate that there may be three relationships between related objects. For example, "A and/or B" may represent: A alone, both A and B, and B alone. In addition, the character "/" herein generally indicates that related objects before and after this character are in an "or" relationship.

It should be understood that the "indicate" mentioned in the embodiments of the present application may mean a direct indication or an indirect indication, or represent that there is an association relationship. For example, A indicating B may mean that A directly indicates B, e.g., that B may be obtained through A; or it may mean that A indirectly indicates B, e.g., that A indicates C, and B may be obtained through C; or it may mean that there is an association relationship between A and B.The term "correspond" described in the embodiments of the present application may mean a relationship of direct or indirect correspondence between the two, or a relationship of association between the two, or a relationship of indicating and being indicated, or configuring and being configured, or the like.

To facilitate understanding of the technical solutions in the embodiments of the present application, related arts for the embodiments of the present application are described below. The following related arts, as optional solutions, may be arbitrarily combined with the technical solutions in the embodiments of the present application, and those combined solutions all fall within protection scope of the embodiments of the present application.

FIG. 4 is a schematic flowchart of an information transmission method, in accordance with an embodiment of the present application. The method may optionally be applied to the system shown in FIG. 1, but is not limited thereto. The method includes at least part of the following.

S410, a terminal device monitors a wake-up signal (WUS), where the WUS includes N signal portions, and N is an integer greater than or equal to 1.

The terminal device monitoring the WUS in S410 may specifically be that: a first component of the terminal device monitors the WUS. The terminal device includes at least the first component and a second component, and power consumption of the first component is lower than that of the second component.

The first component of the terminal device monitoring the WUS may refer to that: in a case where the terminal device is in an RRC idle state or RRC inactive state, the first component of the terminal device monitors the WUS. It should further be pointed out that, in a process of monitoring the WUS by the first component of the terminal device, the second component of the terminal device may be in a dormant state. The dormant state may mean that a part of functions or components of the second component are in an on state, but the other part of the functions or components are in an off state, or referred to as a state of to be woken up, etc. The terminal device may include only the first component and the second component; alternatively, in addition to the first component and the second component, the terminal device may further include other components, but the present embodiments are not exhaustive.

The terminal device may include only the first component and the second component; alternatively, in addition to the first component and the second component, the terminal device may further include other components, but the present embodiments are not exhaustive.

Specifically, the first component may refer to a low-power receiver in the terminal device, or may be referred to as a wake-up receiver (WUR), or may be referred to as a zero-power WUR, or may further be referred to as a low-power WUR, with respect to which more names will not be exhausted in the present embodiments. The second component may refer to a primary receiver in the terminal device.

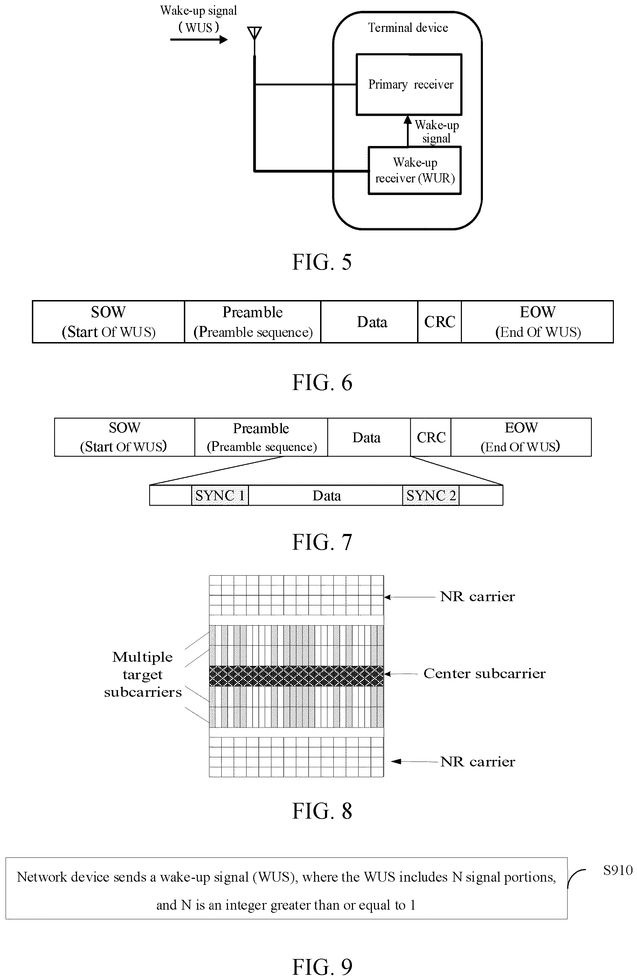

Exemplarily, as shown in FIG. 5, the terminal device may be composed of a primary receiver and a WUR. Further, if the network device requires the terminal device to turn on the second component, i.e., the primary receiver in FIG. 5, the network device may send a WUS to the terminal device. Correspondingly, the WUR of the terminal device may monitor a wake-up signal (WUS). In responses to that the WUR of the terminal device monitors the WUS, it controls to turn on the primary receiver of the terminal device (i.e., the aforementioned second component); in responses to that the WUR of the terminal device does not monitor the WUS, the primary receiver of the terminal device may remain in a dormant state. That is, when the terminal device has no service or no paging message, the terminal device can use only the WUR (i.e., the first component); only when the terminal device has a service, the WUR of the terminal device will receive the WUS and then wake up the primary receiver of the terminal device to transceive data.

For easy distinction, the following describes differences between the WUR and the primary receiver in terms of a modulation scheme, a modulation waveform, a transmission rate, a supported bandwidth range, a bit rate, and the like.

In terms of modulation schemes supported by the two, complexity of a modulation scheme supported by the WUR is lower than that of a modulation scheme supported by the primary receiver. In some implementations, the modulation scheme supported by the WUR may include one or more of the following modulation schemes: amplitude shift keying (ASK), phase shift keying (PSK), frequency shift keying (FSK), or the like. Correspondingly, the modulation scheme supported by the primary receiver may include one or more of the following modulation schemes: quadrature phase shift keying (QPSK), quadrature amplitude modulation (QAM), orthogonal frequency division multiplexing (OFDM), or the like. Of course, in some other implementations, the primary receiver may also support at least one modulation shceme of ASK, PSK or FSK, which is not limited in the embodiments of the present application.

In terms of modulation waveforms supported by the two, complexity of a modulation waveform supported by the WUR is lower than that of a modulation waveform supported by the primary receiver. In other words, the modulation waveform supported by the WUR is simpler than the modulation waveform supported by the primary receiver.

In terms of transmission rates supported by the two, a transmission rate supported by the WUR is lower than a transmission rate supported by the primary receiver.

In terms of bandwidth ranges supported by the two, a bandwidth range supported by the WUR is less than a bandwidth range supported by the primary receiver. In other words, the bandwidth range supported by the WUR is narrower than the bandwidth range supported by the primary receiver.

In terms of bit rates supported by the two, a bit rate supported by the WUR is lower than a bit rate supported by the primary receiver.

In solutions provided by the present embodiments, the first component (i.e., the WUR) of the terminal device monitors the WUS, which can save power consumption of the terminal device. This is because the WUR of the terminal device operates with extremely low power consumption (generally less than 1 mw). And the WUR of the terminal device uses the scheme of the ASK or FSK to modulate signala, which also allows the WUR of the terminal device to receive and demodulate signals using an extremely simple hardware structure and an extremely simple receiving method. For example, for ASK signals, the WUR of the terminal device needs to use only a method of envelope detection to receive signals. Therefore, compared with a method in which traditional terminal devices always use the primary receiver, the WUR of the terminal device is used to monitor the WUS in the present embodiments, which can greatly save the power consumption of the terminal device.

The following first describes the N signal portions included in the WUS.

The N signal portions include a first signal portion, and the first signal portion is used for carrying target information. The target information includes at least one of the following: wake-up information, or a paging short message.

The target information is main information carried by the WUS.

The target information may include only the wake-up information; or the target information may include only the paging short message; or the target information may include both the wake-up information and the paging short message.

The paging short message may include at least one of the following: earthquake and tsunami warning system (ETWS) notification, commercial mobile alert system (CMAS) notification, or indication information of whether a system message is updated. It should be understood that the above is only an exemplary description, the paging short message may also include other types of notification and/or indication information depending on actual conditions or requirements, and the present embodiments are not exhaustive.

The wake-up information may also be referred to as power saving indication information. The wake-up information may be used to indicate that the terminal device monitors a paging message. Specifically, the wake-up information may be used to indicate whether the terminal device needs to receive a paging message. That is, the wake-up information is used to indicate whether the terminal device has a paging message sent on a PO (paging occasion) of the terminal device. For example, when the network device needs to wake up the terminal device to monitor a paging message on its PO, the network device may send a WUS to the terminal device, and a first signal portion of the WUS carries the wake-up information. The terminal device may be in an RRC idle state or an RRC inactive state.

Further, the wake-up information is dedicated to the terminal device; or the wake-up information is shared by a terminal device group, where the terminal device group includes the terminal device; or the wake-up information is dedicated to a first service cell, where the first service cell is a service cell at which the terminal device is located.

Explain the above respectively:
in a first case, the wake-up information may be dedicated to the terminal device.

That is, a network device sends a WUS to a terminal device in order to wake up the terminal device, and a first signal portion of the WUS carries the wake-up information dedicated to the terminal device.

It should be understood that in this case, the wake-up information may include an identifier of the terminal device. Here, the identifier of the terminal device may be any one of the following: a temporary mobile subscriber identity (TMSI), an international mobile subscriber identity (IMSI), and an inactive radio network temporary identifier (I-RNTI).

After receiving the WUS, the terminal device obtains the wake-up information from the first signal portion of the WUS. If the wake-up information includes the identifier of the terminal device, the terminal device may perform subsequent processing based on specific content contained in the wake-up information. For example, the wake-up information is used to indicate that the terminal device monitors a paging message, the terminal device may wake up the second component (i.e., the primary receiver) to monitor the paging message.

In a second case, the wake-up information is shared by a terminal device group, and the terminal device group includes the terminal device.

There may be one or more terminal device groups, which is not limited in the present embodiments. That is, the wake-up information may be shared by one or more terminal device groups. Furthermore, the terminal device described in the present embodiments is any one of all terminal devices in the one or more terminal device groups.

That is, the network device sends the WUS to all terminal devices in the one or more terminal device groups in order to wake up the one or more terminal device groups, and the first signal portion of the WUS carries wake-up information shared by the one or more terminal device groups.

It should be understood that in this case, the wake-up information may further include one of the following: an identifier of a terminal device group, and a bitmap.

Specifically, the identifier of the terminal device group may include identifiers of one or more terminal device groups. Correspondingly, after receiving the WUS, the terminal device obtains the wake-up information from the first signal portion of the WUS. If the wake-up information includes an identifier of a terminal device group to which the terminal device belongs, the terminal device is waken up and performs subsequent processing based on specific content contained in the wake-up information. For example, the wake-up information is used to indicate that the terminal devices in the terminal device group monitors a paging message, the terminal device may wake up the second component (i.e., the primary receiver) to monitor the paging message.

The bitmap may include Q bits, where Q is an integer greater than or equal to 1. In the Q bits included in the bitmap, each bit may be used for corresponding to a terminal device group, and different bits correspond to different terminal device groups.

In the Q bits, a value of each bit may be used for indicating whether to wake up a terminal device in a corresponding terminal device group.

The value of each bit may include a binary first value and a binary second value. The binary first value is used for indicating waking up the terminal device in the corresponding terminal device group. That is, the binary first value is used for indicating that the terminal device in the corresponding terminal device group wakes up the second component. The binary second value is used for indicating not waking up the terminal device in the corresponding terminal device group. That is, the binary second value is used for indicating that the terminal device in the terminal device group does not wake up the second component. The binary first value and the binary second value are different. For example, the binary first value is 1 and the binary second value is 0, or the binary first value is 0 and the binary second value is 1.

For example, after receiving the WUS, the terminal device obtains the wake-up information from the first signal portion of the WUS. If the wake-up information includes the bitmap, a value of a bit corresponding to the terminal device group to which the terminal device belongs is obtained from the bitmap. If the value of the bit is the binary first value, the terminal device may wake up the second component (i.e., the primary receiver) to monitor the paging message.

In a third case, the wake-up information is dedicated to a first service cell, and the first service cell is a service cell at which the terminal device is located.

That is, the network device sends the WUS to all terminal devices in the first service cell to wake up all terminal devices in the first service cell, and the first signal portion of the WUS carries the wake-up information shared by all terminal devices in the first service cell. Correspondingly, all terminal devices in the first service cell may each monitor the WUS. In the present embodiments, the terminal device is any one of all terminal devices in the first service cell.

It should be understood that in this case, the wake-up information may further include: an identifier of the first serving cell. That is, after receiving the WUS, the terminal device obtains the wake-up information from the first signal portion of the WUS. If the wake-up information carries the identifier of the first service cell and the first service cell is a cell where the terminal device is located, the terminal device wakes up the second component (i.e., the primary receiver) to monitor the paging message.

Alternatively, in this case, the wake-up information may not carry an identifier or a bitmap. That is, after receiving the WUS, the terminal device obtains the wake-up information from the first signal portion of the WUS. If the wake-up information does not carry the identifier or bitmap, the terminal device directly wakes up the second component (i.e., the primary receiver) to monitor the paging message.

Exemplarily, the target information carried in the aforementioned first signal portion, as shown in FIG. 6, may be represented as "Data".

On the basis that the first signal portion is used for carrying the target information, in the solutions provided in the embodiments, the first signal portion may further used for carrying a synchronization sequence, and the synchronization sequence is used for the terminal device to maintain synchronization.

The synchronization sequence is located at one of the following positions:
before the first signal portion;
within the first signal portion; and
after the first signal portion.

It should be noted that the first signal portion may carry the synchronization sequence or may not carry the synchronization sequence. Furthermore, in a case where the first signal portion carrys the synchronization sequence, a number of synchronization sequences may be one or more.

Whether the first signal portion carries the synchronization sequence, or the number of the synchronization sequences carried in the first signal portion, may be determined depending on actual conditions. Specifically, whether the first signal portion carries the synchronization sequence, or the number of the synchronization sequences carried in the first signal portion, may be related to a length of the target information.

By way of example, in a case where the length of the target information is less than a first preset number, the first signal portion may not carry the synchronization sequence. The first preset number may be set depending on actual conditions, such as 8 bytes or 2 bytes, or shorter or longer, which is not exhaustive here.

In a case where the length of the target information is greater than or equal to the first preset number, the first signal portion may carry the synchronization sequence. In this case, the number of the synchronization sequences may also be related to the length of the target information. For example, there may be a preset first corresponding relationship, and the preset first corresponding relationship may include a preset length and a preset number corresponding thereto. Correspondingly, based on the length of the target information, a target length may be determined from the preset first corresponding relationship, and a target number corresponding to the target length may be used as the number of the synchronization sequences.

In a case where there is one synchronization sequence, the one synchronization sequence may be located before the first signal portion, within the first signal portion, or after the first signal portion.

In this case, a length of the one synchronization sequence may be configured depending on actual conditions. For example, the length may be fixed to a length of 8 bits, or it may be longer or shorter, which is not exhaustive here. Specific content of the synchronization sequence may be set depending on actual conditions, as long as communicating parties have negotiated in advance, which is not limited here.

In a case where there are multiple synchronization sequences, positions of different synchronization signals in the multiple synchronization signals may be different. In the multiple synchronization signals, any one synchronization sequence may be located before the first signal portion, within the first signal portion, or after the first signal portion.

In this case, lengths of different synchronization sequences in the multiple synchronization signals may be the same, and a length of each synchronization signal is configured depending on actual conditions. For example, the length may be fixed to a length of 8 bits, or it may be longer or shorter, which is not exhaustive here. Specific content of different synchronization sequences in the multiple synchronization signals may be the same, and may be set depending on actual conditions, as long as communicating parties have negotiated in advance, which is not limited here.

Exemplarily, there may be two synchronization sequences, and the two synchronization sequences may be represented as "SYNC 1" and "SYNC 2" as shown in FIG. 7. The two synchronization sequences "SYNC 1" and "SYNC 2" are each located within the first signal portion. It should be pointed out that since the data carried by the first signal portion shown in FIG. 7 is the target information, although the two synchronization sequences "SYNC 1" and "SYNC 2" are added to the data in FIG. 7, it does not mean that "SYNC 1" and "SYNC 2" are added in the target information. It can be understood that "SYNC 1" and "SYNC 2" are added at any two time domain positions within the first signal portion.

The first signal portion is further used for carrying a reverse bit (inverse bit), and the reverse bit is used for determining an envelope detection threshold. The reverse bit may be expressed as "inverse bit".

The reverse bit is located in partial bits of the target information.

The reverse bit may be added at each position of positions with two adjacent positions spaced with a specified number of bits in the target information. The specified number may be set depending on actual conditions, for example, it may be 10, 20, or more or less, which is not exhaustive here.

Alternatively, the reverse bit may be added at any position in continuous bit positions in a case where a number of continuous bit positions with the same value in the target information is greater than a preset bit quantity threshold value. The preset bit quantity threshold value may be set depending on actual conditions, such as 10, 16, or 20, or more or less, which is not exhaustive here.

A number of reverse bits may be one or more, which is not limited here.

Furthermore, a value of the reverse bit is different from values of partial bits of the target information.

For example, a reverse bit may be added at each position of positions, with two adjacent positions spaced with a specified number of bits in the target information, and the reverse bit has a value opposite to that of a bit adjacent to the position.

Exemplarily, in a case where the reverse bit is in a continuous plurality of bits whose values are 1, the reverse bit is 0; otherwise, in a case where the reverse bit is in a continuous plurality of bits whose values are 0, the reverse bit is 1. Assume that the preset bit quantity threshold value may be 10, that is, when there are 11 or more some bits with values of 1 continuously transmitted in the target information, a reverse bit 0 may be added at any position in these bits. For example, two reverse bits 0 may be added continuously in some bits, or one reverse bit 0 may be added in some bits, and the number of the reverse bits is not limited here.

The above is a detailed description of the first signal portion of the WUS. In a possible implementation, the N signal portions of the WUS may include other signal portions in addition to the first signal portion, which is further described below.

The N signal portions further include at least one of the following:
a second signal portion, where the second signal portion is used for carrying a first signal sequence, and the first signal sequence is used for indicating a starting position of the WUS;
a third signal portion, where the third signal portion is used for carrying a preamble sequence, and the preamble sequence is used for performing clock synchronization;
a fourth signal portion, where the fourth signal portion is used for carrying a cyclic redundancy check (CRC); or
a fifth signal portion, where the fifth signal portion is used for carrying a second signal sequence, and the second signal sequence is used for indicating an ending position of the WUS.

Explain the above respectively, the second signal portion is used for carrying a first signal sequence, the first signal sequence may be as shown in FIGS. 6 and 7, specifically "SOW", which means start of a wake-up signal (Start Of WUS).

A length of the first signal sequence may be set depending on actual conditions. For example, the length of the first signal sequence may be a fixed value, such as 4 bits, or longer or shorter, which is not limited here.

Specific content of the first signal sequence may be set depending on actual conditions, as long as communicating parties have confirmed in advance that they have the same meaning for the first signal sequence. For example, the first signal sequence may specifically be a special or specified signal sequence, such as 1111, or 1010. Since a WUS is generally modulated by using the OOK, a special signal sequence may be used as the first signal sequence to represent that the WUS starts transmission, that is, a starting transmission of specific content of the WUS is at a position after SOW (i.e., the first signal sequence). Correspondingly, in a case where the terminal device (specifically, the first component of the terminal device) receives and identifies the first signal sequence, after determining that the SOW is received, then the terminal device starts to receive the specific content of the WUS. Here, the specific content of the WUS may refer to the aforementioned target information, and may further include a preamble sequence, a CRC, or the like.

The third signal portion is used for carrying a preamble sequence. The preamble sequence may be represented as "Preamble" as shown in FIG. 6 or 7.

A main function of the preamble sequence is to perform clock synchronization.

In a case where a preamble sequence is received, the terminal device (specifically the first component of the terminal device) may obtain clock information (such as clock frequency of a system, or an interval between, for example, two modulation symbols) by obtaining time intervals between multiple modulation symbols in the preamble sequence, so that subsequent data (i.e., the target information carried in the first signal portion) may be received based on the clock information.

In addition, the preamble sequence may be further used for indicating a signal parameter of the WUS, and the signal parameter of the WUS includes at least one of the following: a signal length, or a transmission rate.

The preamble sequence may indicate only the signal length; or the preamble sequence may indicate only the transmission rate; or the preamble sequence may indicate both the signal length and the transmission rate.

The signal length may refer to a length of all content carried by the WUS, such as 240 bits (or longer or shorter).

Alternatively, the signal length may refer to lengths respectively corresponding to the N signal portions carried by the WUS.

Alternatively, the signal length may refer to: a length of one or more signal portions of all the N signal portions. For example, the signal length is used for indicating that only a length of the first signal portion is A bits; for another example, the signal length is used for indicating that the length of the first signal portion is A bits, the length of the second signal portion is B bits, and so on.

The transmission rate may specifically refer to a transmission rate of the WUS. A unit of the transmission rate may be bit rate per second (kbps). Specific value of the transmission rate is not limited in the present embodiments.

The fourth signal portion is used for carrying a cyclic redundancy check (CRC), such as the CRC shown in FIG. 6 or 7. The CRC is used for performing CRC check on information carried by the first signal portion (i.e., data) to verify whether a data portion received by WUR is correct.

The fifth signal portion is used for carrying a second signal sequence, and the second signal sequence corresponds to the aforementioned first signal sequence. Exemplarily, the second signal sequence may be represented as end of a wake-up signal (End Of WUS, EOW), as shown in FIG. 6 or 7. That is, the EOW is used for indicating an ending position of the WUS.

A length of the second signal sequence may be set depending on actual conditions. For example, the length of the second signal sequence may be a fixed value, such as 4 bits, or longer or shorter, which is not limited here.

Specific content of the second signal sequence may be set depending on actual conditions. The second signal sequence may be another special or specified signal sequence, such as "1110", or " 110".

It should be understood that, as described in the above embodiments, the first signal sequence is also a special or specified signal sequence. Here, the second signal sequence and the first signal sequence may be different special or specified signal sequences, or the second signal sequence and the first signal sequence may be a same special or specified signal sequence.

The above is a detailed description for specific information respectively carried by the N signal portions in the WUS. It should be further explained that in actual processing, the WUS may not include other signal portions except the first signal portion; or the WUS may include a part of other signal portions in addition to the first signal portion; or the WUS may include all of the N signal portions, all of which are within the protection scope of the present embodiments.

In a possible implementation, different signal portions in the N signal portions use a same symbol length. Alternatively, at least one signal portion in the N signal portions and other signal portions use different symbol lengths.

That is, symbol lengths used by various signal portions of the WUS may be the same or different. The symbol may refer to an OFDM symbol.

The at least one signal portion in the N signal portions and other signal portions use different symbol lengths, it may mean that M signal portions in the N signal portions use a same symbol length, which is a first symbol length, and the remaining N-M signal portions use a same symbol length, which is a second symbol length. The first symbol length is different from the second symbol length, where M is an integer less than or equal to N.

Alternatively, the at least one signal portion in the N signal portions and other signal portions use different symbol lengths, it may mean that different signal portions in the N signal portions use different symbol lengths. That is, a symbol length used by any one signal portion is different from that used by other signal portions.

A relationship between the different symbol lengths may refer to a proportional relationship or a multiple relationship between the different symbol lengths. For example, a symbol length of the preamble sequence carried in the third signal portion is 1/2 of a symbol length of the target information carried in the first signal portion.

The relationship between the different symbol lengths may be preset, or be configured by a network device. The relationship between the different symbol lengths is configured by the network device, and specifically may be notified to the terminal device by the network, such as by notifying the terminal device through an RRC signaling, DCI or a system broadcast message. In the above implementations, different signal portions of the WUS use different symbol lengths, which may be more conducive to controlling overheads of different signal portions. For example, in a case where a preamble has a length (i.e., a number of information bits) being constant, compared with using a preamble having a longer symbol length, using a preamble having a shorter symbol length may shorten a total time length occupied by the preamble.

The above embodiments describe specific information content and its formats that are capable of being carried by the WUS. Further, when the terminal device receives (or monitors) a WUS, it may decode a value of each bit in sequence, and perform sequential combination for values of all bits in sequence to obtain entire content of the WUS. Here, the sequential combination may refer to combining according to an order of receiving time.

In an implementation, the WUS may occupy a portion of spectrums of a primary system (a system corresponding to the primary receiver) or a piece of dedicated spectrum resource during transmission. The WUS may be transmitted in the following three manners.

### The first manner

The WUS is an on-off keying (OOK) signal in binary. The OOK signal is obtained based on amplitude shift keying (ASK) modulation or frequency shift keying (FSK) modulation.

In this manner, a value of a k-th bit in the WUS is determined by a k-th amplitude of the OOK signal, where k is an integer greater than or equal to 1. The k-th amplitude of the OOK signal may specifically refer to an amplitude of the OOK signal at a k-th moment.

Specifically, if an amplitude of the OOK signal received by the terminal device (specifically the first component of the terminal device) at the k-th moment is a first amplitude, then the terminal device may determine that the value of the k-th bit in WUS may be a first value; and if the amplitude of the OOK signal received by the terminal device (specifically the first component of the terminal device) at the k-th moment is a second amplitude, then the terminal device may determine that the value of the k-th bit in WUS may be a second value.

The first amplitude is different from the second amplitude, for example, the first amplitude may be greater than or equal to a first amplitude threshold, and the second amplitude may be less than the first amplitude threshold, or vice versa. The first amplitude threshold may be set depending on actual conditions, and may be related to a power size, a path loss, etc., of the OOK signal actually transmitted on a network device side, which is not limited in the present embodiments.

The first value is different from the second value, for example, the first value is 1 and the second value is 0, or the first value is 0 and the second value is 1.

By way of example, if the amplitude of the OOK signal received by the terminal device (specifically the first component of the terminal device) at the k-th moment is less than the first amplitude threshold, the terminal device may determine that the value of the k-th bit in WUS may be 0; and if the amplitude of the OOK signal received by the terminal device (specifically the first component of the terminal device) at the k-th moment is greater than or equal to the first amplitude threshold, the terminal device may determine that the value of the k-th bit in WUS is 1; or vice versa. The foregoing is only an illustrative description and is not intended to limit the present embodiments.

The WUS may occupy a piece of dedicated frequency domain resource (or of a dedicated frequency domain resource), or the WUS may occupy a portion of the frequency domain resource of a primary system (a system corresponding to a primary receiver).

### The second manner

The WUS is an OOK signal generated based on multiple target subcarriers on an orthogonal frequency division multiplexing (OFDM) symbol.

The WUS is the OOK signal generated based on the multiple target subcarriers on the OFDM symbol, which may specifically mean that: the WUS is an OOK signal simulated generated in a method by generating an OFDM waveform.

Further, a value of an i-th bit in the WUS is determined by a state of a signal received within a first frequency domain range at an i-th time domain position, where i is an integer greater than or equal to 1. The i-th time domain position is a position at which an i-th OFDM symbol is located, and the first frequency domain range is related to a frequency domain range occupied by the multiple target subcarriers. The i-th OFDM symbol is any one of the aforementioned OFDM symbols used to generate the OOK signal.

To be specific, in a case where the state of a signal received by the terminal device within the first frequency domain range at the i-th time domain position is a first signal state, the value of the i-th bit is determined to be a first value; and in a case where the state of a signal received by the terminal device within the first frequency domain range at the i-th time domain position is a second signal state, the value of the i-th bit is determined to be a second value.

The state of a signal may specifically refer to a power value of the signal or an amplitude value of the signal. The state of a signal may include the first signal state or the second signal state. The first signal state is different from the second signal state. For example, the first signal state may refer to a state in which the power value of the signal is greater than a first power threshold, and the second signal state may refer to a state in which the power value of the signal is less than or equal to a first energy threshold, or vice versa. For another example, the first signal state may refer to a state in which the amplitude value of the signal is greater than a second amplitude threshold, and the second signal state may refer to a state in which the amplitude value of the signal is less than or equal to a second amplitude threshold, or vice versa.

The value of the i-th bit may be the first value or the second value. The first value is different from the second value, For example, the first value is 1 and the second value is 0, or the first value is 0 and the second value is 1.

The first frequency domain range is related to the frequency domain range occupied by the multiple target subcarriers, which may specifically mean that: the first frequency domain range is the same as the frequency domain range occupied by the multiple target subcarriers; or the first frequency domain range is within the frequency domain range occupied by the multiple target subcarriers, and the first frequency domain range is smaller than the frequency domain range occupied by the multiple target subcarriers.

Furthermore, a size of the aforementioned first frequency domain range may be preset, for example, may be obtained by receiving any one of DCI, an RRC signaling, and a system message when the terminal device was in an RRC connected state last time.

Alternatively, the aforementioned first frequency domain range may be determined based on relevant information of multiple target subcarriers. In this case, it is particularly necessary to obtain the relevant information of the multiple target subcarriers in advance. For example, the relevant information of the multiple target subcarriers may include at least one of the following: a subcarrier spacing of the multiple target subcarriers, relevant configuration of an OFDM symbol, a length of the CP, or a number of the multiple target subcarriers. Correspondingly, in this case, the terminal device may determine the frequency domain range occupied by multiple target subcarriers based on the relevant information of the multiple target subcarriers, and determine the first frequency domain range based on the frequency domain range occupied by the multiple target subcarriers.

The multiple target subcarriers may be some or all subcarriers in the OFDM symbol.

In a case where the multiple target subcarriers are some subcarriers in the OFDM symbol, the multiple target subcarriers do not include a center subcarrier. That is, at least some of the subcarriers other than the center subcarrier on any OFDM symbol is used as the multiple target subcarriers. For example, all subcarriers except the center subcarrier may be used as the multiple target subcarriers; or at least two subcarriers except the center subcarrier selected from all subcarriers may be used as the multiple target subcarriers.

Further, in a case where the multiple target subcarriers are some subcarriers in the OFDM symbol, the multiple target subcarriers are symmetrically distributed around the center subcarrier. For example, FIG. 8 illustrates that the number of the multiple target subcarriers on OFDM in the OFDM symbol is 4, that is, there are 4 target subcarriers used for WUS transmission. Further, still referring to FIG. 8, the 4 target subcarriers used for the WUS transmission are symmetrically distributed around the center subcarrier (represented as a black background square grid pattern in FIG. 8).

The number of the multiple target subcarriers is configured by the network device, or is preset. Specifically, in a manner of transmitting the WUS based on the multiple target subcarriers on the OFDM symbol, a greater number of target subcarriers, the more conducive it is to enhancing coverage and also suitable for supporting a larger cell radius. Conversely, a smaller number of target subcarriers are suitable for supporting fewer cells. It should be understood that, in a case where the subcarrier spacing is constant, the number of the target subcarriers is positively proportional to bandwidth occupied by the WUS. Therefore, flexible configuration of the multiple target subcarriers is also equivalent to flexible configuration of the bandwidth occupied by the WUS. In order to support flexibility of network deployment, the number of the target subcarriers may be flexibly configured, for example, it may be preset, or configured by the network device. The manner of configured by the network device may be that the network device informs the terminal device through any one of a system message, an RRC signaling or DCI.

The OFDM symbol does not include a cyclic prefix (CP). Alternatively, the OFDM symbol includes a cyclic prefix (CP). That is, the WUS is the OOK signal generated based on the multiple target subcarriers on the OFDM symbol, which means that when the WUS signal is generated by using OFDM, the OFDM symbol may have no CP, or each OFDM symbol may have a CP.

In a case where the OFDM symbol includes the cyclic prefix (CP), a length of the CP is at least partially different from that of a carrier of a primary system. The length of the CP is configured by the network device, or is preset.

The subcarrier spacing of the multiple target subcarriers is the same as that of the primary system. Alternatively, the subcarrier spacing of the multiple target subcarriers is different from that of the primary system. The subcarrier spacing of the multiple target subcarriers is configured by the network device, or is preset.

Using the second manner may have the following advantages that: OFDM may be implemented by using an FFT scheme, so an FFT converter may be shared with the primary system, with low implementation complexity; and transmitting the OOK signal on the multiple subcarriers of the OFDM may increase transmission power of the OOK signal and ensure receiving performance of the terminal device.

### The third manner

The WUS is an OOK signal generated based on a single carrier.

A value of a j-th bit in the WUS is determined by a state of a signal received within a second frequency domain range at a j-th time domain position, where j is an integer greater than or equal to 1. The second frequency domain range is related to a frequency domain range occupied by the single carrier.

In this manner, the second frequency domain range is related to the frequency domain range occupied by the single carrier. For example, the second frequency domain range may be preset, or may be configured by a network device, or may be determined based on the frequency domain range occupied by the single carrier.

To be specific: in a case where the state of a signal received by the terminal device at the j-th time domain position within the second frequency domain range is a third signal state, the value of the j-th bit is determined to be a first value; and in a case where the state of a signal received by the terminal device at the j-th time domain position within the second frequency domain range is a fourth signal state, the value of the j-th bit is determined to be a second value.

The state of a signal may specifically refer to a power value of the signal or an amplitude value of the signal. The state of a signal may include the third signal state or the fourth signal state. The third signal state is different from the fourth signal state. For example, the third signal state may refer to a state in which the power value of the signal is greater than a second power threshold, and the fourth signal state may refer to a state in which the power value of the signal is less than or equal to the second power threshold, or vice versa. For another example, the third signal state may refer to a state where the amplitude value of the signal is greater than a third amplitude threshold, and the fourth signal state may refer to a state where the amplitude value of the signal is less than or equal to the third amplitude threshold, or vice versa.

It should be noted that the second power threshold may be the same as or different from the first power threshold in the second manner described above, and the third amplitude threshold may be the same as or different from the second amplitude threshold in the second manner described above.

In an example, the second power threshold may be less than the first power threshold, and the third amplitude threshold may be less than the second amplitude threshold. This is because, in the second manner, the WUS is transmitted through multiple subcarriers, the power or amplitude of its signal may be greater than that of the WUS transmitted by the single carrier in this manner. Based on this, the second power threshold or the third amplitude threshold may be set to be less than the first power threshold or the second amplitude threshold of the second manner to ensure that this manner may obtain a value of each bit more accurately.

A value of a bit may be a first value or a second value. The first value is different from the second value. For example, the first value is 1 and the second value is 0, or the first value is 0 and the second value is 1.

The second frequency domain range is configured by the network device, which may mean that the second frequency domain range is obtained by receiving any one of DCI, an RRC signaling, and a system message when the terminal device was in an RRC connected state last time.

The second frequency domain range is determined based on the frequency domain range occupied by the single carrier, which may mean that the terminal device obtains the frequency domain range occupied by the single carrier in advance and determines that the second frequency domain range is equal to the frequency domain range occupied by the single carrier; or the terminal device obtains the frequency domain range occupied by the single carrier in advance and determines that the second frequency domain range is a partial frequency domain range within the frequency domain range occupied by the single carrier.

It can be seen that by using the above scheme, the WUS monitored by the terminal device can carry N signal portions, by this way, content capable of being carried by the WUS may be divided, so that while ensuring power saving of the terminal device, corresponding signal portions can be carried more flexibly in the WUS. Therefore, the WUS may be more flexibly applied to more scenarios. In addition, the above scheme further provides designs for symbol length and multiple transmission mannners for the WUS, thereby ensuring that transmission of the WUS is more reasonable and suitable for deployment in various low-power scenarios.

FIG. 9 is a schematic flowchart of an information transmission method, in accordance with an embodiment of the present application. The method may optionally be applied to the system shown in FIG. 1, but is not limited thereto. The method includes at least part of the following.

S910, the network device sends a wake-up signal (WUS), where the WUS includes N signal portions, and N is an integer greater than or equal to 1.

The following first describes the N signal portions included in the WUS.

The N signal portions include a first signal portion, and the first signal portion is used for carrying target information. The target information includes at least one of the following: wake-up information, or a paging short message.

The target information is main information carried by the WUS.

The target information may include only the wake-up information; or the target information may include only the paging short message; or the target information may include both the wake-up information and the paging short message.

The paging short message may include at least one of the following: earthquake and tsunami warning system (ETWS) notification, commercial mobile alert system (CMAS) notification, or indication information of whether a system message is updated. It should be understood that the above is only an exemplary description, the paging short message may also include other types of notification and/or indication information depending on actual conditions or requirements, and the present embodiments are not exhaustive.

The wake-up information may also be referred to as power saving indication information. The wake-up information may be used to indicate that the terminal device monitors a paging message. Specifically, the wake-up information may be used to indicate whether the terminal device needs to receive a paging message. That is, the wake-up information is used to indicate whether the terminal device has a paging message sent on a PO (paging occasion) of the terminal device. That is, when the network device needs to wake up the terminal device to monitor a paging message on its PO, the network device may send a WUS to the terminal device, and a first signal portion of the WUS carries the wake-up information. The terminal device may be in an RRC idle state or an RRC inactive state.

Further, the wake-up information is dedicated to the terminal device; or the wake-up information is shared by a terminal device group; or the wake-up information is dedicated to a first service cell.

### Explain the above respectively

In a first case, the wake-up information may be dedicated to a terminal device.

That is, the network device sends a WUS to a terminal device in order to wake up the terminal device, and a first signal portion of the WUS carries the wake-up information dedicated to the terminal device.

It should be understood that, in this case, the wake-up information may include: an identifier of the terminal device. Here, the identifier of the terminal device may be any one of the following: a temporary mobile subscriber identity (TMSI), an international mobile subscriber identity (IMSI), and an inactive radio network temporary identifier (I-RNTI).

In a second case, the wake-up information is shared by a terminal device group.

There may be one or more terminal device groups, which is not limited in the present embodiments. That is, the wake-up information may be shared by the one or more terminal device groups.

That is, the network device sends the WUS to all terminal devices in the one or more terminal device groups in order to wake up the one or more terminal device groups, and the first signal portion of the WUS carries wake-up information shared by the one or more terminal device groups. Correspondingly, all terminal devices in the one or more terminal device groups may monitor the WUS.

It should be understood that, in this case, the wake-up information may further include one of the following: an identifier of a terminal device group, and a bitmap.

Specifically, the identifier of the terminal device group may include identifiers of one or more terminal device groups.

The bitmap may include Q bits, where Q is an integer greater than or equal to 1. In the Q bits included in the bitmap, each bit may be used for corresponding to a terminal device group, and different bits correspond to different terminal device groups.

In the Q bits, a value of each bit may be used for indicating whether to wake up a terminal device in a corresponding terminal device group.

The value of each bit may include a binary first value and a binary second value. The binary first value is used for indicating waking up the terminal device in the corresponding terminal device group. That is, the binary first value is used for indicating that the terminal device in the corresponding terminal device group wakes up the second component. The binary second value is used for indicating not waking up the terminal device in the corresponding terminal device group. That is, the binary second value is used for indicating that the terminal device in the terminal device group does not wake up the second component. The binary first value and the binary second value are different. For example, the binary first value is 1 and the binary second value is 0, or the binary first value is 0 and the binary second value is 1.

In a third case, the wake-up information is dedicated to a first serving cell.

The first service cell is at least one of a plurality of service cells of the network device, that is, there may be one or more first service cells.

That is, the network device sends the WUS to all terminal devices in the first service cell to wake up all terminal devices in the first service cell, and the first signal portion of the WUS carries the wake-up information shared by all terminal devices in the first service cell.

It should be understood that in this case, the wake-up information may further include: an identifier of the first serving cell. Alternatively, in this case, the wake-up information may not carry an identifier or a bitmap.

Exemplarily, the target information carried in the aforementioned first signal portion, as shown in FIG.6, may be represented as "Data".

On the basis that the first signal portion is used for carrying the target information, in the solutions provided in the embodiments, the first signal portion may further used for carrying a synchronization sequence, and the synchronization sequence is used for the terminal device to maintain synchronization.

The synchronization sequence is located at one of the following positions:
before the first signal portion;
within the first signal portion; and
after the first signal portion.

It should be noted that the first signal portion may carry the synchronization sequence or may not carry the synchronization sequence. Furthermore, in a case where the first signal portion carrys the synchronization sequence, the number of synchronization sequences may be one or more.

Whether the first signal portion carries the synchronization sequence, or the number of the synchronization sequences carried in the first signal portion, may be determined depending on actual conditions. Specifically, whether the first signal portion carries the synchronization sequence, or the number of the synchronization sequences carried in the first signal portion, may be related to a length of the target information.

By way of example, in a case where the length of the target information is less than a first preset number, the first signal portion may not carry the synchronization sequence. The first preset number may be set depending on actual conditions, such as 8 bytes or 2 bytes, or shorter or longer, which is not exhaustive here.

In a case where the length of the target information is greater than or equal to the first preset number, the first signal portion may carry the synchronization sequence. In this case, the number of the synchronization sequences may also be related to the length of the target information. For example, there may be a preset first corresponding relationship, and the preset first corresponding relationship may include a preset length and a preset number corresponding thereto. Correspondingly, based on the length of the target information, a target length may be determined from the preset first corresponding relationship, and a target number corresponding to the target length may be used as the number of the synchronization sequences.

In a case where there is one synchronization sequence, the one synchronization sequence may be located before the first signal portion, within the first signal portion, or after the first signal portion.

In this case, a length of the one synchronization sequence may be configured depending on actual conditions. For example, the length may be fixed to a length of 8 bits, or it may be longer or shorter, which is not exhaustive here. Specific content of the synchronization sequence may be set depending on actual conditions, as long as communicating parties have negotiated in advance, which is not limited here.

In a case where there are multiple synchronization sequences, positions of different synchronization signals in the multiple synchronization signals may be different. In the multiple synchronization signals, any one synchronization sequence may be located before the first signal portion, within the first signal portion, or after the first signal portion.

In this case, lengths of different synchronization sequences in the multiple synchronization signals may be the same, and a length of each synchronization signal is configured depending on actual conditions. For example, the length may be fixed to a length of 8 bits, or it may be longer or shorter, which is not exhaustive here. Specific content of different synchronization sequences in the multiple synchronization signals may be the same, and may be set depending on actual conditions, as long as communicating parties have negotiated in advance, which is not limited here.

Exemplarily, there may be two synchronization sequences, and the two synchronization sequences may be represented as "SYNC 1" and "SYNC 2" as shown in FIG. 7. The two synchronization sequences "SYNC 1" and "SYNC 2" are each located within the first signal portion. It should be pointed out that, since the data carried by the first signal portion shown in FIG. 7 is the target information, although the two synchronization sequences "SYNC 1" and "SYNC 2" are added to the data in FIG. 7, it does not mean that "SYNC 1" and "SYNC 2" are added in the target information. It can be understood that "SYNC 1" and "SYNC 2" are added at any two time domain positions within the first signal portion.

The first signal portion is further used for carrying a reverse bit, and the reverse bit is used for determining an envelope detection threshold. The reverse bit may be expressed as "inverse bit".

The reverse bit is located in partial bits of the target information.

The reverse bit may be added at each position of positions with two adjacent positions spaced with a specified number of bits in the target information. The specified number may be set depending on actual conditions, for example, it may be 10, 20, or more or less, which is not exhaustive here.

Alternatively, the reverse bit may be added at any position in continuous bit positions in a case where a number of continuous bit positions with the same value in the target information is greater than a preset bit quantity threshold value. The preset bit quantity threshold value may be set depending on actual conditions, such as 10, 16, or 20, or more or less, which is not exhaustive here.

The number of reverse bits may be one or more, which is not limited here.

For example, a reverse bit may be added at each position of positions, with two adjacent positions spaced with a specified number of bits in the target information, and the reverse bit has a value opposite to that of a bit adjacent to the position.

Furthermore, a value of the reverse bit is different from a value of partial bits of the target information. For example, in a case where the reverse bit is added to a continuous plurality of bits whose values are 1, the reverse bit is 0; otherwise, in a case where the reverse bit is added to a continuous plurality of bits whose values are 0, the reverse bit is 1. Assume that the preset bit quantity threshold value may be 10, that is, when there are 11 or more some bits with values of 1 continuously transmitted in the target information, a reverse bit 0 may be added at any position in these bits. For example, two reverse bits 0 may be added continuously in some bits, or one reverse bit 0 may be added in some bits, and the number of the reverse bits is not limited here.

This is because the WUS may be a signal obtained by the network device using ASK modulation or FSK modulation. In a case where the network device continuously transmits a large number of bits with a same value, it may cause the terminal device (specifically the first component of the terminal device) to be unable to correctly detect to obtain a correct signal. In other words, there may be a problem where the terminal device (specifically the first component of the terminal device) may be unable to determine whether an envelope detection threshold used currently is correct. Therefore, the network device adds the reverse bit in partial bits of the target information (for example, in a large number of bits with a same value that are continuously transmitted) to assist the terminal device (specifically the first component of the terminal device) in determining an envelope detection threshold, thereby ensuring that the terminal device (specifically the first component of the terminal device) may decode correct target information, and ensuring that the terminal device (specifically the first component of the terminal device) correctly decodes all N signal portions of the WUS.

The above is a detailed description of the first signal portion of the WUS. In a possible implementation, the N signal portions of the WUS may include other signal portions in addition to the first signal portion, which is further described below.

The N signal portions further include at least one of the following:
a second signal portion, where the second signal portion is used for carrying a first signal sequence, and the first signal sequence is used for indicating a starting position of the WUS;
a third signal portion, where the third signal portion is used for carrying a preamble sequence, and the preamble sequence is used for performing clock synchronization;
a fourth signal portion, where the fourth signal portion is used for carrying a cyclic redundancy check (CRC); or
a fifth signal portion, where the fifth signal portion is used for carrying a second signal sequence, and the second signal sequence is used for indicating an ending position of the WUS.

Explain the above respectively, the second signal portion is used for carrying a first signal sequence, the first signal sequence may be as shown in FIGS. 6 and 7, specifically "SOW", which means start of a wake-up signal (Start Of WUS).

A length of the first signal sequence may be set depending on actual conditions. For example, the length of the first signal sequence may be a fixed value, such as 4 bits, or longer or shorter, which is not limited here.

Specific content of the first signal sequence may be set depending on actual conditions, as long as communicating parties have confirmed in advance that they have the same meaning for the first signal sequence. For example, the first signal sequence may specifically be a special or specified signal sequence, such as 1111, or 1010. Since a WUS is generally modulated by using the OOK, a special signal sequence may be used as the first signal sequence to represent or indicate that the WUS starts transmission, that is, a starting transmission of specific content of the WUS is at a position after SOW (i.e., the first signal sequence).

The third signal portion is used for carrying a preamble sequence. The preamble sequence may be represented as "Preamble" as shown in FIG. 6 or 7.

A main function of the preamble sequence is to perform clock synchronization, that is, to provide clock synchronization to the WUR of the terminal device.

In addition, the preamble sequence may be further used for indicating a signal parameter of the WUS, and the signal parameter of the WUS includes at least one of the following: a signal length, or a transmission rate.

The preamble sequence may indicate only the signal length; or the preamble sequence may indicate only the transmission rate; or the preamble sequence may indicate both the signal length and the transmission rate.

The signal length may refer to a length of all content carried by the WUS, such as 240 bits (or longer or shorter).

Alternatively, the signal length may refer to lengths respectively corresponding to the N signal portions carried by the WUS.

Alternatively, the signal length may refer to: a length of one or more signal portions of all the N signal portions. For example, the signal length is used for indicating that only a length of the first signal portion is A bits; for another example, the signal length is used for indicating that the length of the first signal portion is A bits, the length of the second signal portion is B bits, and so on.

The transmission rate may specifically refer to a transmission rate of the WUS. A unit of the transmission rate may be bit rate per second (kbps). Specific value of the transmission rate is not limited in the present embodiments.

The fourth signal portion is used for carrying a cyclic redundancy check (CRC), such as the CRC shown in FIG. 6 or 7. The CRC is used for performing CRC check on information carried by the first signal portion (i.e., data) to verify whether a portion, i.e., the data, received by WUR is correct.

The fifth signal portion is used for carrying a second signal sequence, and the second signal sequence corresponds to the aforementioned first signal sequence. Exemplarily, the second signal sequence may be represented as end of a wake-up signal (End Of WUS, EOW), as shown in FIG. 6 or 7. That is, the EOW is used for indicating an ending position of the WUS, orindicating that WUS transmission ends.

A length of the second signal sequence may be set depending on actual conditions. For example, the length of the second signal sequence may be a fixed value, such as 4 bits, or longer or shorter, which is not limited here.

Specific content of the second signal sequence may be set depending on actual conditions. The second signal sequence may be another special or specified signal sequence, such as "1110", or "110".

It should be understood that, as described in the above embodiments, the first signal sequence is also a special or specified signal sequence. Here, the second signal sequence and the first signal sequence may be different special or specified signal sequences, or the second signal sequence and the first signal sequence may be a same special or specified signal sequence.

The above is a detailed description for specific information respectively carried by the N signal portions in the WUS. It should be further explained that in actual processing, the WUS may not include other signal portions except the first signal portion; or the WUS may include a part of other signal portions in addition the first signal portion; or the WUS may include all of the N signal portions, of which are within the protection scope of the present embodiments.

In a possible implementation, different signal portions in the N signal portions use a same symbol length. Alternatively, at least one signal portion in the N signal portions and other signal portions use different symbol lengths.

That is, symbol lengths used by various signal portions of the WUS may be the same or different. The symbol may refer to an OFDM symbol.

The at least one signal portion in the N signal portions and other signal portions use different symbol lengths, it may mean that M signal portions in the N signal portions use a same symbol length, which is a first symbol length, and the remaining N-M signal portions use a same symbol length, which is a second symbol length. The first symbol length is different from the second symbol length, where M is an integer less than or equal to N.

Alternatively, the at least one signal portion in the N signal portions and other signal portions use different symbol lengths, it may mean that different signal portions in the N signal portions use different symbol lengths. That is, a symbol length used by any one signal portion is different from that used by other signal portions.

A relationship between the different symbol lengths may refer to a proportional relationship or a multiple relationship between the different symbol lengths. For example, a symbol length of the preamble sequence carried in the third signal portion is 1/2 of a symbol length of the target information carried in the first signal portion.

The relationship between the different symbol lengths may be preset, or be configured by the network device. The relationship between the different symbol lengths is configured by the network device, and specifically may be that the network device sends first configuration information, where the first configuration information is used to configure the relationship between the different symbol lengths. Furthermore, the network device may send the first configuration information to the terminal device when the terminal device is in an RRC connected state. The first configuration information may be carried by any one of an RRC signaling, DCI or a system broadcast message.

In the above implementations, different signal portions of the WUS use different symbol lengths, which may be more conducive to controlling overheads of different signal portions. For example, in a case where a preamble has a length (i.e., the number of information bits) being constant, compared with using a preamble having a longer symbol length, using a preamble having a shorter symbol length may shorten a total time length occupied by the preamble.

The above embodiments describe specific information content and its formats that are capable of being carried by the WUS. Further, when the network device generates (or monitors) a WUS, it may transmit the WUS based on any one of the following three manners. By this way, when the terminal device receives the WUS, it may decode a value of each bit, and combine values of all bits in sequence to obtain entire content of the WUS. The following is to describe the three manners.

### The first manner

The WUS is an on-off keying (OOK) signal in binary. The OOK signal is obtained based on amplitude shift keying (ASK) modulation or frequency shift keying (FSK) modulation.

In this manner, a k-th amplitude of the OOK signal is determined by a value of a k-th bit, where k is an integer greater than or equal to 1. The k-th amplitude of the OOK signal may specifically refer to an amplitude of the OOK signal at a k-th moment.

Specifically, in response to determining that the value of the k-th bit is a first value, the network device sets the amplitude of the OOK signal at the k-th moment to a first amplitude state; and in response to determining that the value of the k-th bit is a second value, the network device sets the amplitude of the OOK signal at the k-th moment to a second amplitude state.

The first amplitude state is different from the second amplitude state. For example, the first amplitude state may be a first amplitude value (such as 0), and the second amplitude may be a second amplitude value (such as non-zero); or vice versa. Here, the first amplitude value (or referred to as the first amplitude state) may mean that the network device does not transmit a signal at a corresponding moment, and the second amplitude value (or referred to as the second amplitude state) may be an amplitude value generated when the network device transmits a signal at a corresponding moment.

The first value is different from the second value. For example, the first value is 1 and the second value is 0, or the first value is 0 and the second value is 1.

That is, in a case where the network device wants to transmit a WUS, the network device may take an OOK signal obtained by modulation as the WUS, and then send the WUS. Here, the network device may use its own OOK transmitter to perform modulation to directly obtain or generate an OOK signal. Specifically, a manner may include that: the network device uses an ASK modulation scheme or FSK modulation mode of its own OOK transmitter to perform modulating to obtain, or to generate the OOK signal, and takes the OOK signal as the WUS, and then transmits the WUS through its own OOK transmitter. In the above manner, the network device may be required to use a separate transmitter to transmit the WUS, and the network device may continue to use its own primary transmitter to transmit a signal of a primary system (for example, NR as the primary system, whose signal is an OFDM signal).

The WUS may occupy a piece of dedicated frequency domain resource (or a dedicated frequency domain resource), or the WUS may occupy a portion of the frequency domain resource of a primary system (a system corresponding to a primary receiver).

### The second manner

The WUS is an OOK signal generated based on multiple target subcarriers on an OFDM symbol.

In this manner, a network device side may generate and transmit the WUS using a primary transmitter (or referred to as an OFDM transmitter). The WUS may occupy a portion of spectrum (or frequency domain resources) of the primary system in this case. Of course, the WUS may also occupy a piece of dedicated spectrum resource.

The WUS is the OOK signal generated based on the multiple target subcarriers on the OFDM symbol, which may specifically mean that: the WUS is an OOK signal generated in a simulation method by generating an OFDM waveform.

Further, states of multiple target subcarriers on an i-th OFDM symbol are determined by a value of an i-th bit, where i is an integer greater than or equal to 1. The i-th OFDM symbol is any one of the aforementioned OFDM symbols used to generate the OOK signal. The i-th bit in the WUS may be any one of all the bits in the WUS.

Specifically, the method further includes:
in response to determining that the value of the i-th bit is a first value, setting, by the network device, the multiple target subcarriers on the i-th OFDM symbol to a first state;
   and/or
in response to determining that the value of the i-th bit is a second value, setting, by the network device, the multiple target subcarriers on the i-th OFDM symbol to a second state.

The value of the i-th bit may be the first value or the second value. The first value is different from the second value. For example, the first value is 1 and the second value is 0, or the first value is 0 and the second value is 1.

The states of the multiple target subcarrier may specifically refer to amplitudes or levels of the multiple target subcarrier. The states of the multiple target subcarrier may include a first state or a second state.

In an example, setting the multiple target subcarriers on the i-th OFDM symbol to the first state may specifically refer to: setting the multiple target subcarriers on the i-th OFDM symbol to a high level. Setting the multiple target subcarriers on the i-th OFDM symbol to the second state may specifically refer to: setting the multiple target subcarriers to a low level.

Alternatively, in another example, setting the multiple target subcarriers on the i-th OFDM symbol to the first state may specifically refer to: setting the multiple target subcarriers on the i-th OFDM symbol to a low level; and setting the multiple target subcarriers on the i-th OFDM symbol to the second state may specifically refer to: setting the multiple target subcarriers to a high level.

The multiple target subcarriers may be some or all subcarriers in the OFDM symbol.

In a case where the multiple target subcarriers are some subcarriers in the OFDM symbol, the multiple target subcarriers do not include a center subcarrier. That is, at least some of the subcarriers other than the center subcarrier on any OFDM symbol is used as the multiple target subcarriers. For example, all subcarriers except the center subcarrier may be used as the multiple target subcarriers; or at least two subcarriers except the center subcarrier selected from all subcarriers may be used as the multiple target subcarriers.

Further, in a case where the multiple target subcarriers are some subcarriers in the OFDM symbol, the multiple target subcarriers are symmetrically distributed around the center subcarrier. For example, FIG. 8 illustrates that the number of the multiple target subcarriers on OFDM in the OFDM symbol is 4, that is, there are 4 target subcarriers used for WUS transmission. Further, still referring to FIG. 8, the 4 target subcarriers used for the WUS transmission are symmetrically distributed around the center subcarrier (represented as a black background square grid pattern in FIG. 8).

Illustrated exemplarily with FIG. 8, setting the target subcarriers to the first state is represented by gray, then multiple target subcarriers used for the WUS transmission in the first column on the far left in FIG. 8 are all set to the first state (such as each subcarrier is set to a high level, or vice versa), which may indicate that a value of a corresponding bit in the WUS is the first value, such as 1. Setting the target subcarriers to the second state is represented by white, then multiple target subcarriers used for the WUS transmission in the second column on the far left in FIG. 8 are all set to the second state (such as each subcarrier is set to a low level, or vice versa). In this case, it may be indicated that a value of a corresponding bit in the WUS is the second value, such as 0. In addition, in addition to the above-mentioned multiple target subcarriers and the center subcarrier, "New Radio (NR) carrier" is further shown in FIG. 8. The NR carrier may be a carrier of a current NR primary system, which is not repeated here.

The center subcarrier may be set to a specified state. That is, center subcarriers of all OFDM symbols are set to the specified state. The specified state may be set depending on actual conditions, for example, it may refer to a high level or a low level. Exemplarily, the center subcarriers of all OFDM symbols may be set to the high level (or set to the low level). By this way, influence of a direct current (DC) subcarrier may be eliminated.

A subcarrier spacing of the multiple target subcarriers is the same as that of the primary system. Alternatively, the subcarrier spacing of the multiple target subcarriers is different from that of the primary system. That is, in a case where the network device transmits the WUS in the primary system, the subcarrier spacing of the WUS may be the same as or different from that of the primary system.

In a case where the subcarrier spacing of the multiple target subcarriers is different from that of the primary system, the subcarrier spacing of the multiple target subcarriers is configured by the network device or is preset. Correspondingly, the method further includes: sending, by the network device, second configuration information, where the second configuration information is used to configure the subcarrier spacing of the multiple target subcarriers. Further, the network device may send the second configuration information to the terminal device when the terminal device is in an RRC connected state. The second configuration information may be carried by any one of an RRC signaling, DCI or a system broadcast message.

The OFDM symbol does not include a cyclic prefix (CP). Alternatively, the OFDM symbol includes a cyclic prefix (CP). That is, the WUS is the OOK signal generated based on the multiple target subcarriers on the OFDM symbol, which means that when the WUS signal is generated by using OFDM, the OFDM symbol may have no CP, or each OFDM symbol may have a CP.

In a preferred implementation, the OFDM symbol needs to include the CP (especially when the WUS is obtained using ASK modulation), and it is even more necessary to use the CP to combat multipath fading to prevent interference between WUS symbols. In a case where the OFDM symbol includes the cyclic prefix (CP), a length of the CP is at least partially different from that of a carrier of a primary system.

The method further includes: sending, by the network device, third configuration information, where the third configuration information is used to configure the length of the CP. Further, the network device may send the third configuration information to the terminal device when the terminal device is in an RRC connected state. The third configuration information may be carried by any one of an RRC signaling, DCI or a system broadcast message.

In addition, the method further includes: sending, by the network device, fourth configuration information, where the fourth configuration information is used to configure the number of the multiple target subcarriers. Specifically, the network device may send the fourth configuration information to the terminal device when the terminal device is in an RRC connected state. The fourth configuration information may be carried by any one of an RRC signaling, DCI or a system broadcast message.

Specifically, in a manner of transmitting the WUS based on the multiple target subcarriers on the OFDM symbol, a greater number of target subcarriers, the more conducive it is to enhancing coverage and also suitable for supporting a larger cell radius. Conversely, a smaller number of target subcarriers are suitable for supporting fewer cells. It should be understood that, in a case where the subcarrier spacing is constant, the number of target subcarriers is positively proportional to bandwidth occupied by the WUS. Therefore, flexible configuration of the multiple target subcarriers is also equivalent to flexible configuration of the bandwidth occupied by the WUS.

Taking NR as the primary system as an example: when the primary system operates in FR1 (also referred to as Sub-6 GHz (below 6 GHz) frequency band), the subcarrier spacing of the primary system is 15 KHz or 30 KHz. In the manner that a WUS is an OOK signal generated based on multiple target subcarriers on an OFDM symbol, if the OFDM symbol uses the same subcarrier spacing as the primary system, a peak rate will be no more than 14 kbps (corresponding to 15 KHz) or no more than 28 kbps (corresponding to 30 KHz). That is, the number of bits capable of being transmitted within a duration of 1 ms is no more than 14 or 28. If overhead of CRC bits (usually multiple CRC bits are required) is further considered, it is feasible if information content that WUS needs to carry is less. However, if the information content that WUS needs to carry is large, this will not meet requirements of WUS information transmission. Therefore, the multiple target subcarriers in the OFDM symbol may use a subcarrier spacing different from that of the primary system. For example, taking NR as the primary system, the WUS may be transmitted in an initial downlink (DL) bandwidth part (BWP). In order to ensure that the WUS can carry enough information per unit time, a transmission rate of the WUS needs to meet certain requirements, such as not less than 100 kbps. This requires that a carrier bandwidth (corresponding to the subcarrier spacing when using OFDM modulation) of the WUS needs to be large enough, for example, greater than 100 KHz. But on the other hand, using a large subcarrier spacing will lead to an increase in CP overhead. Therefore, the subcarrier spacing of the WUS needs to be selected reasonably, and compromise between its transmission rate and CP overhead needs to be considered. For example, if the subcarrier spacing is 120 KHz, a time length corresponding to an OFDM symbol is 8.33 microseconds (us). Considering a cell covering a radius of 600 m, a length of the CP cannot be less than 2 us, and corresponding CP overhead is 2 / (2+8.33) in this case, which is close to 20%. If the subcarrier spacing is 240 KHz, the CP overhead will be around 30% (cp2us / (2+4.17) = 30%). It can be seen that for FR1, selecting a subcarrier spacing of 120 KHz may be a reasonable choice for WUS transmission. Therefore, in the second manner, the subcarrier spacing and/or the length of the CP of the multiple target subcarriers may be different from or at least partially different from those of the carriers of the primary system.

Using the second manner may have the following advantages that: OFDM may be implemented by using an FFT scheme, so an FFT converter may be shared with the primary system, with low implementation complexity; and transmitting the OOK signal on the multiple subcarriers of the OFDM may increase transmission power of the OOK signal and ensure receiving performance of the terminal device.

### The third manner

The WUS is an OOK signal generated based on a single carrier.

A state of the single carrier at a j-th time domain position is determined by a value of a j-th bit, where j is an integer greater than or equal to 1. The j-th time domain position may refer to any one of all time domain positions for sending the WUS.

The method further includes:
in response to determining that the value of the j-th bit is a first value, setting, by the network device, the single carrier at the j-th time domain position to a third state;
   and/or
in response to determining that the value of the j-th bit is a second value, setting, by the network device, the single carrier at the j-th time domain position to a fourth state.

The value of a bit may be a first value or a second value. The first value is different from the second value. For example, the first value is 1 and the second value is 0, or the first value is 0 and the second value is 1.

The state of the single carrier may specifically refer to an amplitude or level of the single carrier. The state of the multiple target subcarriers may include the third state or the fourth state.

In an example, setting the single carrier at the j-th time domain position to the third state may specifically refer to: setting all the multiple target subcarriers to a low level; and setting the single carrier at the j-th time domain position to the fourth state may specifically refer to: setting the single carrier at the j-th time domain position to a high level.

Alternatively, in another example, setting the single carrier at the j-th time domain position to the third state may specifically refer to: setting all the multiple target subcarriers to a high level; and setting the single carrier at the j-th time domain position to the fourth state may specifically refer to: setting the single carrier at the j-th time domain position to a low level.

It should be noted that the third state described here may be the same as or different from the first state in the aforementioned second manner, and the fourth state may be the same as or different from the second state in the aforementioned second manner. In an example, the third state is the high level, the amplitude or value of the high level may be greater than that of the first state, and the low level of the fourth state may be the same as the low level of the second state. The present embodiments do not exhaustively list all possible cases.

It can be seen that by using the above scheme, the WUS sent by the network device can carry N signal portions, by this way, content capable of being carried by the WUS may be divided, so that while ensuring power saving of the terminal device, corresponding signal portions can be carried more flexibly in the WUS. Therefore, the WUS may be more flexibly applied to more scenarios. In addition, the above scheme further provides designs for symbol length and multiple transmission mannners for the WUS, thereby ensuring that transmission of the WUS is more reasonable and suitable for deployment in various low-power scenarios.

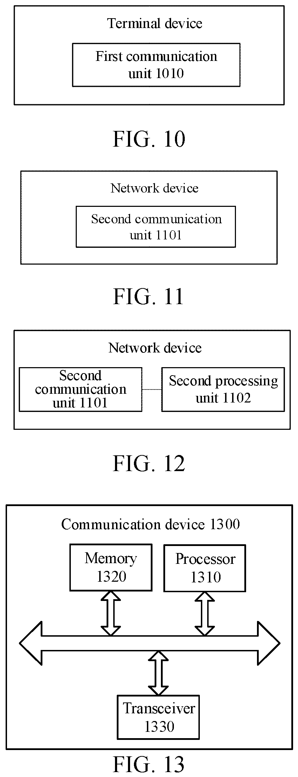

FIG. 10 is a schematic diagram showing a structure of a terminal device, in accordance with an embodiment of the present application, which includes:
a first communication unit 1010 configured to monitor a wake-up signal (WUS);
where the WUS includes N signal portions, and N is an integer greater than or equal to 1.

The N signal portions include a first signal portion, and the first signal portion is used for carrying target information.

The target information includes at least one of the following: wake-up information, or a paging short message.

The wake-up information is dedicated to the terminal device; or
the wake-up information is shared by a terminal device group, where the terminal device group includes the terminal device; or
the wake-up information is dedicated to a first service cell, where the first service cell is a service cell at which the terminal device is located.

The first signal portion is further used for carrying a synchronization sequence, and the synchronization sequence is used for the terminal device to maintain synchronization.

The synchronization sequence is located at one of the following positions:
before the first signal portion;
within the first signal portion; and
after the first signal portion.

The first signal portion is further used for carrying a reverse bit, and the reverse bit is used for determining an envelope detection threshold.

The reverse bit is located in partial bits of the target information.

The N signal portions further include at least one of the following:
a second signal portion, where the second signal portion is used for carrying the first signal sequence, and the first signal sequence is used for indicateing a starting position of the WUS;
a third signal portion, where the third signal portion is used for carrying a preamble sequence, and the preamble sequence is used for perfoming clock synchronization;
a fourth signal portion, where the fourth signal portion is used for carrying a cyclic redundancy check (CRC); or
a fifth signal portion, where the fifth signal portion is used for carrying a second signal sequence, and the second signal sequence is used for indicating an ending position of the WUS.

The preamble sequence is further used for indicating a signal parameter of the WUS;
where the signal parameter of the WUS includes at least one of the following: a signal length, or a transmission rate.

Different signal portions in the N signal portions use a same symbol length.

At least one signal portion in the N signal portions and other signal portions use different symbol lengths.

A relationship between the different symbol lengths is preset, or is configured by a network device.

The WUS is an on-off keying (OOK) signal in binary.

The OOK signal is obtained based on amplitude shift keying (ASK) modulation or frequency shift keying (FSK) modulation.

The WUS is the OOK signal generated based on multiple target subcarriers on an orthogonal frequency division multiplexing (OFDM) symbol.

A value of an i-th bit in the WUS is determined by a state of a signal received within a first frequency domain range at an i-th time domain position, where i is an integer greater than or equal to 1;
where the i-th time domain position is a position at which an i-th OFDM symbol is located, and the first frequency domain range is related to a frequency domain range occupied by the multiple target subcarriers.

The multiple target subcarriers do not include a center subcarrier.

The multiple target subcarriers are symmetrically distributed around the center subcarrier.

A subcarrier spacing of the multiple target subcarriers is the same as that of a primary system.

The subcarrier spacing of the multiple target subcarriers is different from that of the primary system.

The subcarrier spacing of the multiple target subcarriers is configured by the network device or is preset.

The OFDM symbol does not include a cyclic prefix (CP).

The OFDM symbol includes the cyclic prefix (CP).

A length of the CP is at least partially different from a length of the CP of the OFDM symbol of the primary system.

The length of the CP is configured by the network device or is preset.

A number of the multiple target subcarriers is configured by the network device or is preset.

The WUS is an OOK signal generated based on a single carrier.

A value of a j-th bit in the WUS is determined by a state of a signal received within a second frequency domain at a j-th time domain position, where j is an integer greater than or equal to 1;
where the second frequency domain range is related to a frequency domain range occupied by the single carrier.

The terminal device includes at least a first component and a second component, and power consumption of the first component is lower than that of the second component;
where the first component includes the first communication unit.

It should further be understood that the terminal device may further include a first processing unit, which may be used to execute related processing in the method, such as decoding the WUS, which is not exhaustive here.

The terminal device in the embodiments of the present application can implement corresponding functions of the terminal device in the aforementioned method embodiments. For the processes, functions, implementations and effects corresponding to each module (sub-module, unit or component) in the terminal device, reference may be made to the corresponding description in the above method embodiments, which will not be repeated here. It will be noted that the functions described in the various modules (sub-modules, units or components) in the terminal device in the embodiments of the present application may be implemented by different modules (sub-modules, units or components, etc.) or by the same module (sub-module, unit or component).

It can be seen that by using the above scheme, the WUS monitored by the terminal device can carry N signal portions, by this way, content capable of being carried by the WUS may be divided, so that while ensuring power saving of the terminal device, corresponding signal portions can be carried more flexibly in the WUS. Therefore, the WUS may be more flexibly applied to more scenarios. In addition, the above scheme further provides designs for symbol length and multiple transmission mannners for the WUS, thereby ensuring that transmission of the WUS is more reasonable and suitable for deployment in various low-power scenarios.

FIG. 11 is a schematic diagram of a structure of a network device, in accordance with an embodiment of the present application, which includes:
a second communication unit 1101 configured to send a wake-up signal (WUS);
where the WUS includes N signal portions, and N is an integer greater than or equal to 1.

The N signal portions include a first signal portion, and the first signal portion is used to carry target information.

The target information includes at least one of the following: wake-up information, or a paging short message.

The wake-up information is dedicated to to a terminal device; or
the wake-up information is shared by a terminal device group; or
the wake-up information is dedicated to a first serving cell.

The first signal portion is further used for carrying a synchronization sequence, and the synchronization sequence is used for the terminal device to maintain synchronization.

The synchronization sequence is located at one of the following positions:
before the first signal portion;
within the first signal portion; and
after the first signal portion.

The first signal portion is further used for carrying a reverse bit, and the reverse bit is used for determining an envelope detection threshold.

The reverse bit is located in partial bits of the target information.

The N signal portions further include at least one of the following:
a second signal portion, where the second signal portion is used for carrying a first signal sequence, the first signal sequence is used for indicating a starting position of the WUS;
a third signal portion, where the third signal portion is used for carrying a preamble sequence, the preamble sequence is used for performing clock synchronization;
a fourth signal portion, where the fourth signal portion is used for carrying a cyclic redundancy check (CRC); or
a fifth signal portion, where the fifth signal portion is used for carrying a second signal sequence, and the second signal sequence is used for indicating an ending position of the WUS.

The preamble sequence is further used for indicating a signal parameter of the WUS;
where the signal parameter of the WUS includes at least one of the following: a signal length, or a transmission rate.

Different signal portions in the N signal portions use a same symbol length.

At least one signal portion in the N signal portions and other signal portions use different symbol lengths.

The second communication unit is configured to send first configuration information, and the first configuration information is used to configure a relationship between the different symbol lengths.

The WUS is an on-off keying (OOK) signal in binary.

The OOK signal is obtained based on amplitude shift keying (ASK) modulation or frequency shift keying (FSK) modulation.

The WUS is an OOK signal generated based on multiple target subcarriers on an OFDM symbol.

A state of multiple target subcarriers on an i-th OFDM symbol is determined by a value of an i-th bit, where i is an integer greater than or equal to 1.

Based on FIG. 11, as shown in FIG. 12, the network device further includes:
a second processing unit 1102 configured to:
set the multiple target subcarriers on the i-th OFDM symbol to a first state in response to determining that the value of the i-th bit is the first value;
   and/or
set the multiple target subcarriers on the i-th OFDM symbol to a second state in response to determining that the value of the i-th bit is the second value.

The multiple target subcarriers do not include a center subcarrier.

The center subcarrier is set to a specified state.

The multiple target subcarriers are symmetrically distributed around the center subcarrier.

A subcarrier spacing of the multiple target subcarriers is the same as that of a primary system.

The subcarrier spacing of the multiple target subcarriers is different from that of the primary system.

The second communication unit 1101 is configured to send a second configuration information, and the second configuration information is used to configure the subcarrier spacing of the multiple target subcarriers.

The OFDM symbol does not include a cyclic prefix (CP).

The OFDM symbol includes the cyclic prefix (CP).

A length of the CP is at least partially different from a length of the CP of the OFDM symbol of the primary system.

The second communication unit 1101 is configured to send a third configuration information, and the third configuration information is used to configure the length of the CP.

The second communication unit 1101 is configured to send a fourth configuration information, and the fourth configuration information is used to configure a number of the multiple target subcarriers.

The WUS is an OOK signal generated based on a single carrier.

A state of the single carrier at a j-th time domain position is determined by a value of a j-th bit, where j is an integer greater than or equal to 1.

The second processing unit 1102 is configured to:
set the single carrier at the j-th time domain position to a third state in response to determining that the value of the j-th bit is a first value;
   and/or
set the single carrier at the j-th time domain position to a fourth state, in response to determining that the value of the j-th bit is a second value.

The network device in the embodiments of the present application can implement corresponding functions of the network device in the aforementioned method embodiments. For the processes, functions, implementations and effects corresponding to each module (sub-module, unit or component) in the network device, reference may be made to the corresponding description in the above method embodiments, which will not be repeated here. It will be noted that the functions described in the various modules (sub-modules, units or components) in the network device in the embodiments of the present application may be implemented by different modules (sub-modules, units or components, etc.) or by the same module (sub-module, unit or component).

By using the above scheme, the WUS teansmitted by the network device can carry N signal portions, by this way, content capable of being carried by the WUS may be divided, so that while ensuring power saving of the terminal device, corresponding signal portions can be carried more flexibly in the WUS. Therefore, the WUS may be more flexibly applied to more scenarios. In addition, the above scheme further provides designs for symbol length and multiple transmission mannners for the WUS, thereby ensuring that transmission of the WUS is more reasonable and suitable for deployment in various low-power scenarios.

FIG. 13 is a schematic structural diagram of a communication device 1300, in accordance with embodiments of the present application. The communication device 1300 includes a processor 1310, and the processor 1310 may call and run a computer program from a memory to cause the communication device 1300 to perform the methods in the embodiments of the present application.

In a possible implementation, the communication device 1300 may further include a memory 1320. The processor 1310 may call and run the computer program from the memory 1320 to cause the communication device 1300 to perform the methods in the embodiments of the present application.

The memory 1320 may be a separate device independent of the processor 1310, or may be integrated into the processor 1310.

In a possible implementation, the communication device 1300 may further include a transceiver 1330, and the processor 1310 may control the transceiver 1330 to communicate with other devices, specifically, to transmit information or data to other devices, or to receive information or data transmitted by other devices.

The transceiver 1330 may include a transmitter and a receiver. The transceiver 1330 may further include an antenna. There may be one or more antennas.

In a possible implementation, the communication device 1300 may be the network device in the embodiments of the present application, and the communication device 1300 may implement the corresponding processes implemented by the network device in each method in the embodiments of the present application, which will not be repeated here for the sake of brevity.

In a possible implementation, the communication device 1300 may be the terminal device in the embodiments of the present application, and the communication device 1300 may implement the corresponding processes implemented by the terminal device in each method in the embodiments of the present application, which will not be repeated here for the sake of brevity.

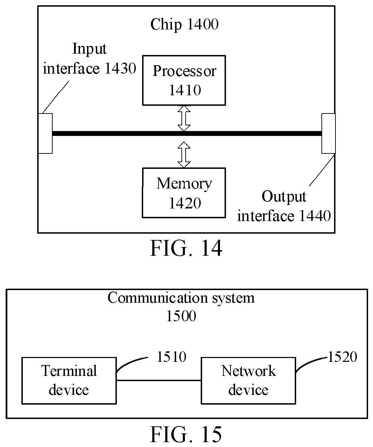

FIG. 14 is a schematic structural diagram of a chip 1400, in accordance with embodiments of the present application. The chip 1400 includes a processor 1410, and the processor 1410 may call and run a computer program from a memory to implement the methods in the embodiments of the present application.

In a possible implementation, the chip 1400 further includes a memory 1420. The processor 1410 may call and run the computer program from the memory 1420 to implement the methods performed by the terminal device or network device in the embodiments of the present application.

The memory 1420 may be a separate device independent of the processor 1410, or may be integrated into the processor 1410.

In a possible implementation, the chip 1400 may further include an input interface 1430. The processor 1410 may control the input interface 1430 to communicate with other devices or chips, specifically, may control the input interface 1430 to obtain information or data sent by other devices or chips.

In a possible implementation, the chip 1400 may further include an output interface 1440. The processor 1410 may control the output interface 1440 to communicate with other devices or chips, specifically, may control the output interface 1440 to output information or data to other devices or chips.

In a possible implementation, the chip may be applied to the network device in the embodiments of the present application, and the chip may implement the corresponding processes implemented by the network device in each method in the embodiments of the present application, which will not be repeated here for the sake of brevity.

In a possible implementation, the chip may be applied to the terminal device in the embodiments of the present application, and the chip may implement the corresponding processes implemented by the terminal device in each method in the embodiments of the present application, which will not be repeated here for the sake of brevity.

Chips used in the network device and the terminal device may be the same chip or different chips.

It should be understood that the chip mentioned in the embodiments of the present application may be referred to as a system-level chip, a system chip, a chip system, a system-on-chip, or the like.

The processor mentioned above may be a general-purpose processor, a digital signal processor (DSP), a field programmable gate array (FPGA), an application specific integrated circuit (ASIC), other programmable logic devices, a transistor logic device, a discrete hardware component, or the like. The general purpose processor mentioned above may be a microprocessor or any conventional processor, or the like.

The memory mentioned above may be a volatile (transitory) memory or a non-volatile (non-transitory) memory, or may include both volatile and non-volatile memories. Here, the non-volatile memory may be a read-only memory (ROM), a programmable ROM (PROM), an erasable programmable read-only memory (erasable PROM, EPROM), an electrically erasable programmable read-only memory (electrically EPROM, EEPROM), or a flash memory. The volatile memory may be a random access memory (RAM).

It should be understood that the above-mentioned memory is exemplary but not restrictive. For example, the memory in the embodiments of the present application may also be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synch link DRAM, SLDRAM), a direct memory bus random access memory (direct rambus RAM, DR RAM), or the like. That is, the memory in the embodiments of the present application is intended to include but is not limited to these and any other suitable types of memory.

FIG. 15 is a schematic block diagram of a communication system 1500, in accordance with embodiments of the present application. The communication system 1500 includes a terminal device 1510 and a network device 1520.

The terminal device 1510 may be used to implement the corresponding functions implemented by the terminal device in the method addressed above, and the network device 1520 may be used to implement the corresponding functions implemented by the network device in the method addressed above, which will not be repeated here for the sake of brevity.

The above embodiments may be implemented in whole or in part through software, hardware, firmware, or any combination thereof. When the embodiments are implemented by using a software program, the software program may be implemented in a form of a computer program product in whole or in part. The computer program product includes one or more computer instructions. When computer program instructions are loaded on and executed by a computer, processes or functions in accordance with the embodiments of the present application are generated in whole or in part. The computer may be a general-purpose computer, a dedicated computer, a computer network, or another programmable device. The computer instructions may be stored in a computer-readable storage medium or transmitted from a computer-readable storage medium to another computer-readable storage medium. For example, the computer instructions may be transmitted from a website, computer, server or data center to another website, computer, server or data center via a wired manner (e.g., coaxial cable, optical fiber, or digital subscriber line (DSL)) or a wireless manner (e.g., infrared, radio or microwave). The computer-readable storage medium may be any usable medium accessible by a computer, or may be a data storage device, such as a server or a data center, integrating one or more usable media. The usable medium may be a magnetic medium (e.g., a floppy disk, a hard disk or a magnetic tape), an optical medium (e.g., a DVD), a semiconductor medium (e.g., a solid state drive (SSD)), or the like.

It should be understood that in the various embodiments of the present application, the magnitude of the serial number of each of the above-mentioned processes does not mean the order of execution. The order of execution of each process shall be determined by its function and internal logic, and shall not constitute any limitation on the implementation process of the embodiments of the present application.

Those skilled in the art can clearly understand that for the convenience and simplicity of description, the working processes of the systems, devices and units described above may refer to the corresponding processes in the above method embodiments, and details will not be repeated here.

The foregoing descriptions are merely specific implementations of the present application, but the protection scope of the present application is not limited thereto. Any skilled person in the art could readily conceive of changes or replacements within the technical scope of the present application, which shall all be included in the protection scope of the present application. Therefore, the protection scope of the present application shall be subject to the protection scope of the claims.

## Claims

1. An information transmission method, comprising:
monitoring, by a terminal device, a wake-up signal (WUS);
wherein the WUS comprises N signal portions, and N is an integer greater than or equal to 1.

2. The method of claim 1, wherein the N signal portions comprise a first signal portion, and the first signal portion is used for carrying target information.

3. The method of claim 2, wherein the target information comprises at least one of: wake-up information, or a paging short message.

4. The method of claim 3, wherein the wake-up information is dedicated to the terminal device; or
the wake-up information is shared by a terminal device group, and the terminal device group comprises the terminal device; or
the wake-up information is dedicated to a first service cell, and the first service cell is a service cell at which the terminal device is located.

5. The method of any one of claims 2 to 4, wherein the first signal portion is further used for carrying a synchronization sequence, and the synchronization sequence is used for the terminal device to maintain synchronization.

6. The method of claim 5, wherein the synchronization sequence is located at one of following positions:
before the first signal portion;
within the first signal portion; and
after the first signal portion.

7. The method of any one of claims 2 to 6, wherein the first signal portion is further used for carrying a reverse bit, and the reverse bit is used for determining an envelope detection threshold.

8. The method of claim 7, wherein the reverse bit is located in partial bits of the target information.

9. The method of any one of claims 2 to 8, wherein the N signal portions further comprise at least one of:
a second signal portion, wherein the second signal portion is used for carrying a first signal sequence, and the first signal sequence is used for indicating a starting position of the WUS;
a third signal portion, wherein the third signal portion is used for carrying a preamble sequence, and the preamble sequence is used for performing clock synchronization;
a fourth signal portion, wherein the fourth signal portion is used for carrying a cyclic redundancy check (CRC); or
a fifth signal portion, wherein the fifth signal portion is used for carrying a second signal sequence, and the second signal sequence is used for indicating an ending position of the WUS.

10. The method of claim 9, wherein the preamble sequence is further used for indicating a signal parameter of the WUS;
wherein the signal parameter of the WUS comprises at least one of: a signal length, or a transmission rate.

11. The method of any one of claims 1 to 10, wherein different signal portions in the N signal portions use a same symbol length.

12. The method of any one of claims 1 to 10, wherein at least one signal portion in the N signal portions and other signal portions use different symbol lengths.

13. The method of claim 12, wherein a relationship between the different symbol lengths is preset, or is configured by a network device.

14. The method of any one of claims 1 to 13, wherein the WUS is an on-off keying (OOK) signal in binary.

15. The method of claim 14, wherein the OOK signal is obtained based on amplitude shift keying (ASK) modulation or frequency shift keying (FSK) modulation.

16. The method of any one of claims 1 to 13, wherein the WUS is an OOK signal generated based on multiple target subcarriers on an orthogonal frequency division multiplexing (OFDM) symbol.

17. The method of claim 16, wherein a value of an i-th bit in the WUS is determined by a state of a signal received within a first frequency domain range at an i-th time domain position, and i is an integer greater than or equal to 1;
wherein the i-th time domain position is a position at which an i-th OFDM symbol is located, and the first frequency domain range is related to a frequency domain range occupied by the multiple target subcarriers.

18. The method of any one of claims 16 to 17, wherein the multiple target subcarriers do not comprise a center subcarrier.

19. The method of claim 18, wherein the multiple target subcarriers are symmetrically distributed around the center subcarrier.

20. The method of any one of claims 16 to 19, wherein a subcarrier spacing of the multiple target subcarriers is a same as that of a primary system.

21. The method of any one of claims 16 to 19, wherein a subcarrier spacing of the multiple target subcarriers is different from that of a primary system.

22. The method of claim 21, wherein the subcarrier spacing of the multiple target subcarriers is configured by a network device or is preset.

23. The method of any one of claims 16 to 22, wherein the OFDM symbol does not comprise a cyclic prefix (CP).

24. The method of any one of claims 16 to 22, wherein the OFDM symbol comprises a cyclic prefix (CP).

25. The method of claim 24, wherein a length of the CP is at least partially different from a length of a CP of an OFDM symbol of a primary system.

26. The method of claim 24 or 25, wherein a length of the CP is configured by a network device or is preset.

27. The method of any one of claims 16 to 26, wherein a number of the multiple target subcarriers is configured by a network device or is preset.

28. The method of any one of claims 1 to 13, wherein the WUS is an OOK signal generated based on a single carrier.

29. The method of claim 28, wherein a value of a j-th bit in the WUS is determined by a state of a signal received within a second frequency domain range at a j-th time domain position, and j is an integer greater than or equal to 1;
wherein the second frequency domain range is related to a frequency domain range occupied by the single carrier.

30. The method of any one of claims 1 to 29, wherein monitoring, by the terminal device, the WUS comprises:
monitoring, by a first component of the terminal device, the WUS, wherein the terminal device comprises at least the first component and a second component, and power consumption of the first component is lower than that of the second component.

31. An information transmission method, comprising:
sending, by a network device, a wake-up signal (WUS);
wherein the WUS comprises N signal portions, and N is an integer greater than or equal to 1.

32. The method of claim 31, wherein the N signal portions comprises a first signal portion, and the first signal portion is used for carrying target information.

33. The method of claim 32, wherein the target information comprises at least one of: wake-up information, or a paging short message.

34. The method of claim 33, wherein the wake-up information is dedicated to a terminal device; or
the wake-up information is shared by a terminal device group; or
the wake-up information is dedicated to a first serving cell.

35. The method of any one of claims 32 to 34, wherein the first signal portion is further used for carrying a synchronization sequence, and the synchronization sequence is used for the terminal device to maintain synchronization.

36. The method of claim 35, wherein the synchronization sequence is located at one of following positions:
before the first signal portion;
within the first signal portion; and
after the first signal portion.

37. The method of any one of claims 32 to 36, wherein the first signal portion is further used for carrying a reverse bit, and the reverse bit is used for determining an envelope detection threshold.

38. The method of claim 37, wherein the reverse bit is located in partial bits of the target information.

39. The method of any one of claims 32 to 38, wherein the N signal portions further comprise at least one of:
a second signal portion, wherein the second signal portion is used for carrying a first signal sequence, and the first signal sequence is used for indicating a starting position of the WUS;
a third signal portion, wherein the third signal portion is used for carrying a preamble sequence, and the preamble sequence is used for performing clock synchronization;
a fourth signal portion, wherein the fourth signal portion is used for carrying a cyclic redundancy check (CRC); or
a fifth signal portion, wherein the fifth signal portion is used for carrying a second signal sequence, and the second signal sequence is used for indicating an ending position of the WUS.

40. The method of claim 39, wherein the preamble sequence is further used for indicating a signal parameter of the WUS;
wherein the signal parameter of the WUS comprises at least one of: a signal length, or a transmission rate.

41. The method of any one of claims 31 to 40, wherein different signal portions in the N signal portions use a same symbol length.

42. The method of any one of claims 31 to 40, wherein at least one signal portion in the N signal portions and other signal portions use different symbol lengths.

43. The method of claim 42, further comprising:
sending, by the network device, first configuration information, wherein the first configuration information is used to configure a relationship between the different symbol lengths.

44. The method of any one of claims 31 to 43, wherein the WUS is an on-off keying (OOK) signal in binary.

45. The method of claim 44, wherein the OOK signal is obtained based on amplitude shift keying (ASK) modulation or frequency shift keying (FSK) modulation.

46. The method of any one of claims 31 to 43, wherein the WUS is an OOK signal generated based on multiple target subcarriers on an OFDM symbol.

47. The method of claim 46, wherein a state of multiple target subcarriers on an i-th OFDM symbol is determined by a value of an i-th bit, and i is an integer greater than or equal to 1.

48. The method of claim 47, further comprising:
in response to determining that the value of the i-th bit is a first value, setting, by the network device, the multiple target subcarriers on the i-th OFDM symbol to a first state;
and/or
in response to determining that the value of the i-th bit is a second value, setting, by the network device, the multiple target subcarriers on the i-th OFDM symbol to a second state.

49. The method of any one of claims 46 to 48, wherein the multiple target subcarriers do not comprise a center subcarrier.

50. The method of claim 49, wherein the center subcarrier is set to a specified state.

51. The method of claim 49 or 50, wherein the multiple target subcarriers are symmetrically distributed around the center subcarrier.

52. The method of any one of claims 46 to 51, wherein a subcarrier spacing of the multiple target subcarriers is a same as that of a primary system.

53. The method of any one of claims 46 to 51, wherein a subcarrier spacing of the multiple target subcarriers is different from that of a primary system.

54. The method of claim 53, further comprising:
sending, by the network device, second configuration information, wherein the second configuration information is used to configure the subcarrier spacing of the multiple target subcarriers.

55. The method of any one of claims 46 to 54, wherein the OFDM symbol does not comprise a cyclic prefix (CP).

56. The method of any one of claims 46 to 54, wherein the OFDM symbol comprises a cyclic prefix (CP).

57. The method of claim 56, wherein a length of the CP is at least partially different from a length of a CP of an OFDM symbol of a primary system.

58. The method of claim 56 or 57, further comprising:
sending, by the network device, third configuration information, wherein the third configuration information is used to configure the length of the CP.

59. The method of any one of claims 56 to 58, further comprising:
sending, by the network device, fourth configuration information, wherein the fourth configuration information is used to configure a number of the multiple target subcarriers.

60. The method of any one of claims 31 to 43, wherein the WUS is an OOK signal generated based on a single carrier.

61. The method of claim 60, wherein a state of the single carrier at a j-th time domain position is determined by a value of a j-th bit, and j is an integer greater than or equal to 1.

62. The method of claim 61, further comprising:
in response to determining that the value of the j-th bit is a first value, seting, by the network device, the single carrier at the j-th time domain position to a third state;
and/or
in response to determining that the value of the j-th bit is a second value, seting, by the network device, the single carrier at the j-th time domain position to a fourth state.

63. A terminal device, comprising:
a first communication unit configured to monitor a wake-up signal (WUS);
wherein the WUS comprises N signal portions, and N is an integer greater than or equal to 1.

64. The terminal device of claim 63, wherein the N signal portions comprise a first signal portion, and the first signal portion is used for carrying target information.

65. The terminal device of claim 64, wherein the target information comprises at least one of: wake-up information, or a paging short message.

66. The terminal device of claim 65, wherein the wake-up information is dedicated to the terminal device; or
the wake-up information is shared by a terminal device group, and the terminal device group comprises the terminal device; or
the wake-up information is dedicated to a first service cell, and the first service cell is a service cell at which the terminal device is located.

67. The terminal device of any one of claims 64 to 66, wherein the first signal portion is further used for carrying a synchronization sequence, and the synchronization sequence is used for the terminal device to maintain synchronization.

68. The terminal device of claim 67, wherein the synchronization sequence is located at one of following positions:
before the first signal portion;
within the first signal portion; and
after the first signal portion.

69. The terminal device of any one of claims 64 to 68, wherein the first signal portion is further used for carrying a reverse bit, and the reverse bit is used for determining an envelope detection threshold.

70. The terminal device of claim 69, wherein the reverse bit is located in partial bits of the target information.

71. The terminal device of claim 64 to 70, wherein the N signal portions further comprise at least one of:
a second signal portion, wherein the second signal portion is used for carrying a first signal sequence, and the first signal sequence is used for indicating a starting position of the WUS;
a third signal portion, wherein the third signal portion is used for carrying a preamble sequence, and the preamble sequence is used for performing clock synchronization;
a fourth signal portion, wherein the fourth signal portion is used for carrying a cyclic redundancy check (CRC); or
a fifth signal portion, wherein the fifth signal portion is used for carrying a second signal sequence, and the second signal sequence is used for indicating an ending position of the WUS.

72. The terminal device of claim 71, wherein the preamble sequence is further used for indicating a signal parameter of the WUS;
wherein the signal parameter of the WUS comprises at least one of: a signal length, and a transmission rate.

73. The terminal device of any one of claims 63 to 72, wherein different signal portions in the N signal portions use a same symbol length.

74. The terminal device of any one of claims 63 to 72, wherein at least one signal portion in the N signal portions and other signal portions use different symbol lengths.

75. The terminal device of claim 74, wherein a relationship between the different symbol lengths is preset, or is configured by a network device.

76. The terminal device of any one of claims 63 to 75, wherein the WUS is an on-off keying (OOK) signal in binary.

77. The terminal device of claim 76, wherein the OOK signal is obtained based on amplitude shift keying (ASK) modulation or frequency shift keying (FSK) modulation.

78. The terminal device of any one of claims 63 to 75, wherein the WUS is an OOK signal generated based on multiple target subcarriers on an orthogonal frequency division multiplexing (OFDM) symbol.

79. The terminal device of claim 78, wherein a value of an i-th bit in the WUS is determined by a state of a signal received within a first frequency domain range at an i-th time domain position, and i is an integer greater than or equal to 1;
wherein the i-th time domain position is a position at which an i-th OFDM symbol is located, and the first frequency domain range is related to a frequency domain range occupied by the multiple target subcarriers.

80. The terminal device of any one of claims 78 to 79, wherein the multiple target subcarriers do not comprise a center subcarrier.

81. The terminal device of claim 80, wherein the multiple target subcarriers are symmetrically distributed around the central subcarrier.

82. The terminal device of any one of claims 78 to 81, wherein a subcarrier spacing of the multiple target subcarriers is a same as that of a primary system.

83. The terminal device of any one of claims 78 to 81, wherein a subcarrier spacing of the multiple target subcarriers is different from that of a primary system.

84. The terminal device of claim 83, wherein the subcarrier spacing of the multiple target subcarriers is configured by a network device or is a preset.

85. The terminal device of any one of claims 78 to 84, wherein the OFDM symbol does not comprise a cyclic prefix (CP).

86. The terminal device of any one of claims 78 to 84, wherein the OFDM symbol comprises a cyclic prefix (CP).

87. The terminal device of claim 86, wherein a length of the CP is at least partially different from a length of a CP of an OFDM symbol of a primary system.

88. The terminal device of claim 86 or 87, wherein the length of the CP is configured by a network device or is preset.

89. The terminal device of any one of claims 78 to 88, wherein a number of the multiple target subcarriers is configured by a network device or is preset.

90. The terminal device of any one of claims 63 to 75, wherein the WUS is an OOK signal generated based on a single carrier.

91. The terminal device of claim 90, wherein a value of a j-th bit in the WUS is determined by a state of a signal received within a second frequency domain range at a j-th time domain position, and j is an integer greater than or equal to 1;
wherein the second frequency domain range is related to a frequency domain range occupied by the single carrier.

92. The terminal device of any one of claims 63 to 91, wherein the terminal device comprises at least a first component and a second component, and power consumption of the first component is lower than that of the second component;
wherein the first component comprises the first communication unit.

93. A network device, comprising:
a second communication unit configured to send a wake-up signal (WUS);
wherein the WUS comprises N signal portions, and N is an integer greater than or equal to 1.

94. The network device of claim 93, wherein the N signal portions comprise a first signal portion, and the first signal portion is used for carrying target information.

95. The network device of claim 94, wherein the target information comprises at least one of: wake-up information, or a paging short message.

96. The network device of claim 95, wherein the wake-up information is dedicated to a terminal device; or
the wake-up information is shared by a terminal device group; or
the wake-up information is dedicated to a first serving cell.

97. The network device of any one of claims 94 to 96, wherein the first signal portion is further used for carrying a synchronization sequence, and the synchronization sequence is used for the terminal device to maintain synchronization.

98. The network device of claim 97, wherein the synchronization sequence is located at one of following positions:
before the first signal portion;
within the first signal portion; and
after the first signal portion.

99. The network device of any one of claims 94 to 98, wherein the first signal portion is further used for carrying a reverse bit, and the reverse bit is used for determining an envelope detection threshold.

100. The network device of claim 99, wherein the reverse bit is located in partial bits of the target information.

101. The network device of claim 94 to 100, wherein the N signal portions further comprise at least one of:
a second signal portion, wherein the second signal portion is used for carrying a first signal sequence, and the first signal sequence is used for indicating a starting position of the WUS;
a third signal portion, wherein the third signal portion is used for carrying a preamble sequence, and the preamble sequence is used for performing clock synchronization;
a fourth signal portion, wherein the fourth signal portion is used for carrying a cyclic redundancy check (CRC); or
a fifth signal portion, wherein the fifth signal portion is used for carrying a second signal sequence, and the second signal sequence is used for indicating an ending position of the WUS.

102. The network device of claim 101, wherein the preamble sequence is further used for indicating a signal parameter of the WUS;
wherein the signal parameter of the WUS comprises at least one of: a signal length, or a transmission rate.

103. The network device of any one of claims 93 to 102, wherein different signal portions in the N signal portions use a same symbol length.

104. The network device of any one of claims 93 to 102, wherein at least one signal portion in the N signal portions and other signal portions use different symbol lengths.

105. The network device of claim 104, wherein the second communication unit is configured to send first configuration information, and the first configuration information is used to configure a relationship between the different symbol lengths.

106. The network device of any one of claims 93 to 105, wherein the WUS is an on-off keying (OOK) signal in binary.

107. The network device of claim 106, wherein the OOK signal is obtained based on amplitude shift keying (ASK) modulation or frequency shift keying (FSK) modulation.

108. The network device of any one of claims 93 to 105, wherein the WUS is an OOK signal generated based on multiple target subcarriers on an OFDM symbol.

109. The network device of claim 108, wherein a state of multiple target subcarriers on an i-th OFDM symbol is determined by a value of an i-th bit, and i is an integer greater than or equal to 1.

110. The network device of claim 109, further comprising:
a second processing unit configured to set the multiple target subcarriers on the i-th OFDM symbol to a first state in response to determining that the value of the i-th bit is a first value, and/or, set the multiple target subcarriers on the i-th OFDM symbol to a second state in response to determining that the value of the i-th bit is a second value.

111. The network device of any one of claims 108 to 110, wherein the multiple target subcarriers do not comprise a center subcarrier.

112. The network device of claim 111, wherein the center subcarrier is set to a specified state.

113. The network device of claim 111 or 112, wherein the multiple target subcarriers are symmetrically distributed around the center subcarrier.

114. The network device of any one of claims 108 to 113, wherein a subcarrier spacing of the multiple target subcarriers is a same as that of a primary system.

115. The network device of any one of claims 108 to 113, wherein a subcarrier spacing of the multiple target subcarriers is different from that of a primary system.

116. The network device of claim 115, wherein the second communication unit is configured to send second configuration information, and the second configuration information is used to configure the subcarrier spacing of the multiple target subcarriers.

117. The network device of any one of claims 108 to 116, wherein the OFDM symbol does not comprise a cyclic prefix (CP).

118. The network device of any one of claims 108 to 116, wherein the OFDM symbol comprises a cyclic prefix (CP).

119. The network device of claim 118, wherein a length of the CP is at least partially different from a length of a CP of an OFDM symbol of a primary system.

120. The network device of claim 118 or 119, wherein the second communication unit is configured to send third configuration information, and the third configuration information is used to configure the length of the CP.

121. The network device of any one of claims 118 to 120, wherein the second communication unit is configured to send fourth configuration information, and the fourth configuration information is used to configure a number of the multiple target subcarriers.

122. The network device of any one of claims 93 to 105, wherein the WUS is an OOK signal generated based on a single carrier.

123. The network device of claim 122, wherein a state of the single carrier at a j-th time domain position is determined by a value of a j-th bit, and j is an integer greater than or equal to 1.

124. The network device of claim 123, further comprising:
a second processing unit configured to set the single carrier at the j-th time domain position to a third state in response to determining that the value of the j-th bit is a first value, and/or, set the single carrier at the j-th time domain position to a fourth state in response to determining that the value of the j-th bit is a second value.

125. A terminal device, comprising: a processor and a memory, wherein the memory is configured to store a computer program, and the processor is configured to call and run the computer program stored in the memory to cause the terminal device to perform the method of any one of claims 1 to 30.

126. A network device, comprising: a processor and a memory, wherein the memory is configured to store a computer program, and the processor is configured to call and run the computer program stored in the memory to cause the network device to perform the method of any one of claims 31 to 62.

127. A chip, comprising: a processor, configured to call and run a computer program from a memory to cause a device equipped with the chip to perform the method of any one of claims 1 to 30.

128. A chip, comprising: a processor, configured to call and run a computer program from a memory to cause a device equipped with the chip to perform the method of any one of claims 31 to 62.

129. A computer-readable storage medium, configured to store a computer program, wherein the computer program, when executed by a device, causes the device to perform the method of any one of claims 1 to 62.

130. A computer program product, comprising computer program instructions, wherein the computer program instructions cause a computer to perform the method of any one of claims 1 to 62.

131. A computer program, causing a computer to perform the method of any one of claims 1 to 62.
